# EUROPEAN PATENT APPLICATION

(11) **EP 4 486 002 A1**
(43) Date of publication of application: **01.01.2025**
(21) Application number: 23773981.8
(22) Date of filing: 23.03.2023
(51) Int. Cl.: H04W 36/00

(54) **COMMUNICATION METHOD AND COMMUNICATION APPARATUS**

(30) Priority: 24.03.2022 CN 202210295971; 08.08.2022 CN 202210942532
(71) Applicant: Huawei Technologies Co., Ltd., Shenzhen, Guangdong 518129 (CN)
(72) Inventor: WANG, Fanfan, Shenzhen, Guangdong 518129 (CN); GENG, Tingting, Shenzhen, Guangdong 518129 (CN)
(74) Representative: Grünecker Patent- und Rechtsanwälte PartG mbB
(86) International application number: PCT/CN2023/083505
(87) International publication number: WO 2023/179736

(57) **Abstract**

This application provides a communication method and a communication apparatus. The method includes: A terminal device performs redirection from a source cell to a target cell, where the source cell is managed by a source access network device, and the target cell is managed by a target access network device. The terminal device sends a first report, where the first report includes information indicating that a potential failure exists in a process of performing cell redirection by the terminal device, and includes identification information of the target cell. In this way, the first report is used to provide a reference for network parameter optimization, to improve effect of mobility management performed by the network device on the terminal device.

## Description

This application claims priority to Chinese Patent Application No. 202210295971.8, filed with the China National Intellectual Property Administration on March 24, 2022 and entitled "COMMUNICATION METHOD AND COMMUNICATION APPARATUS", and claims priority to Chinese Patent Application No. 202210942532.1, filed with the China National Intellectual Property Administration on August 8, 2022 and entitled "COMMUNICATION METHOD AND COMMUNICATION APPARATUS", both of which are incorporated herein by reference in their entireties.

### TECHNICAL FIELD

This application relates to the communication field, and more specifically, to a communication method and a communication apparatus.

### BACKGROUND

Currently, a mobility robustness optimization (mobility robustness optimization, MRO) mechanism is supported in a mobile communication system. The MRO is an important mechanism for network self-optimization. When a mobility-related failure event (for example, events such as a handover failure or a radio link failure (radio link failure, RLF) in a target cell) occurs on a terminal device, a related parameter of the failure event is reported to a network device, so that the network device can analyze the obtained related parameter. This optimizes a network parameter, and further avoids occurrence of a failure event. However, the current MRO mechanism is not perfect.

### SUMMARY

Embodiments of this application provide a communication method and a communication apparatus, to improve effect of mobility management performed by a network device on a terminal device.

According to a first aspect, a communication method is provided. The method may be performed by a terminal device or a module (for example, a chip) disposed in (or used in) the terminal device.

The method includes: The terminal device performs redirection from a source cell to a target cell, where the source cell is managed by a source access network device, and the target cell is managed by a target access network device. The terminal device sends a first report, where the first report includes information indicating that a potential failure exists in a process of performing cell redirection by the terminal device, and includes identification information of the target cell.

According to the solution, the terminal device sends the first report to a network device (for example, the source access network device and/or the target access network device), to notify that a potential failure risk exists in the process of performing cell redirection by the terminal device, so that the network device can use the first report as a reference when performing network parameter optimization, to reduce a probability that the cell redirection of the terminal device fails, and improve effect of mobility management performed by the network device on the terminal device.

By way of example, and not limitation, the first report includes a redirection success report, a random access report, or a connection setup failure report.

With reference to the first aspect, in some implementations of the first aspect, the method further includes: When the redirection process of the terminal device meets a reporting condition, the terminal device records the first report, where the reporting condition includes one or more of the following conditions:
that running duration of a first timer is less than or equal to a first threshold and greater than or equal to a second threshold, where the running duration of the first timer is duration from time when the terminal device receives a radio resource control (radio resource control, RRC) release message from the source access network device to time when the terminal device sends a random access preamble to the target access network device;
that running duration of a second timer is less than or equal to a third threshold and greater than or equal to a fourth threshold, where the running duration of the second timer is duration from the time when the terminal device receives the RRC release message from the source access network device to time when the terminal device receives an RRC connection setup message from the target access network device;
that running duration of a third timer is less than or equal to a fifth threshold and greater than or equal to a sixth threshold, where the running duration of the third timer is duration from time when the terminal device sends an RRC connection request message to the target access network device to the time when the terminal device receives the RRC connection setup message from the target access network device; or
that the terminal device fails to perform cell redirection on a first frequency, and successfully performs cell redirection on a frequency other than the first frequency, where the first frequency is a candidate frequency that is configured by the source access network device for the terminal device and that is used for the cell redirection, and a frequency of the target cell is the frequency other than the first frequency.

According to the solution, when the process of performing cell redirection by the terminal device meets one or more of the conditions, it may be considered that the potential failure risk exists in the cell redirection process of the terminal device. The terminal device records the first report, and may send the first report to the network device, so that the network device can perform network parameter optimization with reference to the first report, to improve effect of mobility management performed by the network device on the terminal device.

With reference to the first aspect, in some implementations of the first aspect, the second threshold is a product of the first threshold and a first coefficient, and/or the fourth threshold is a product of the third threshold and a second coefficient, and/or the sixth threshold is a product of the fifth threshold and a third coefficient, where the first coefficient, the second coefficient, and the third coefficient are less than 1.

With reference to the first aspect, in some implementations of the first aspect, the method further includes: The terminal device receives first indication information, where the first indication information indicates the reporting condition.

According to the solution, the network device may configure, for the terminal device, the reporting condition for sending the first report, so that the terminal device can provide, for the network device based on a configuration requirement of the network device, the report used for the network parameter optimization.

With reference to the first aspect, in some implementations of the first aspect, that the terminal device receives first indication information includes: The terminal device receives an RRC message, where the RRC message includes the first indication information.

By way of example, and not limitation, the RRC message may include but is not limited to one or more of an RRC setup (RRC Setup) message, an RRC reconfiguration (RRC Reconfiguration) message, an RRC reestablishment (RRC Reestablishment) message, an RRC resume (RRC Resume) message, or an RRC release (RRC Release) message.

According to the solution, the source access network device may notify, by using the RRC message, the terminal device of the reporting condition for sending the first report, so that the terminal device can record, based on the configuration requirement of the network device, the report used for the network parameter optimization, and provide the report for the network device.

With reference to the first aspect, in some implementations of the first aspect, the first report indicates one or more of the following:
the reporting condition, identification information of the source cell, cell measurement information, redirection frequency information, the identification information of the target cell, frequency information of the target cell, the running duration of the first timer, the running duration of the second timer, the running duration of the third timer, or a running duration of a fourth timer.

Identification information of a cell may include cell identification information, where the cell identification information may be at least one of a cell global identifier (cell global identifier, CGI), a physical cell identifier (physical cell identifier, PCI) and frequency, a non-public network identifier (non-public network identifier, NPN ID), a non-terrestrial network identifier (non-terrestrial network identifier, NTN ID), or another cell identifier of the cell. Optionally, the identification information of the cell may further include tracking area code (tracking area code, TAC) and/or identification information, for example, a global network device identifier, of a network device to which the cell belongs. The CGI may include a public land mobile network (public land mobile network, PLMN) ID and a cell ID.

The cell measurement information includes one or more of measurement information of the source cell, measurement information of the target cell, measurement information of a neighboring cell of the source cell, or measurement information of a neighboring cell of the target cell. Measurement information of a cell may include a measurement result obtained by the terminal device by measuring a signal (for example, a reference signal) of the cell. In addition, the running duration of the fourth timer is duration from the time when the terminal device receives the RRC release message from the source access network device to time when the terminal device successfully establishes a service channel with the target access network device. Alternatively, the running duration of the fourth timer is duration from the time when the terminal device receives the RRC release message from the source access network device to time when the terminal device successfully communicates a service data packet with the target access network device.

According to the solution, the first report may include one or more of the foregoing information, and the terminal device provides redirection-related information of the terminal device for the network device by using the first report, so that the network device can accurately perform network parameter optimization with reference to the information in the first report, to improve effect of mobility management performed by the network device on the terminal device.

With reference to the first aspect, in some implementations of the first aspect, that the terminal device sends a first report includes: The terminal device sends the first report to the target access network device.

According to the solution, the first report may be a report sent to the target access network device, so that the target access network device can optimize a configuration of the target cell with reference to the first report.

With reference to the first aspect, in some implementations of the first aspect, that the terminal device sends a first report includes: The terminal device sends the first report to the source access network device, where the first report includes the identification information of the source cell.

According to the solution, the first report may be a report sent to the source access network device, so that the source access network device can optimize a configuration of the source cell with reference to the first report.

With reference to the first aspect, in some implementations of the first aspect, the first report further includes second indication information, and the second indication information indicates whether the cell redirection is triggered by a service or by signal coverage quality. Optionally, the service may be a voice service.

According to the solution, the terminal device notifies, by using the second indication information in the first report, the network device that the cell redirection is triggered by the service or by the signal coverage quality, so that the network device can determine, based on the second indication information, a cause for triggering the cell redirection, and perform network parameter optimization more accurately, to reduce unnecessary or incorrect network parameter optimization.

With reference to the first aspect, in some implementations of the first aspect, the cell redirection is triggered by the service, and the target access network device and the source access network device use different radio access technologies (radio access technologies, RATs).

According to a second aspect, a communication method is provided. For beneficial effects, refer to the descriptions in the first aspect. Details are not described herein again. The method may be performed by an access network device or a module (for example, a chip) disposed in (or used in) the access network device.

The method includes: receiving a first report from a terminal device, where the first report includes information indicating that a potential failure exists in a process of performing cell redirection by the terminal device, and includes identification information of a target cell for the redirection of the terminal device, and the target cell is managed by a target access network device.

With reference to the second aspect, in some implementations of the second aspect, the method further includes: sending the first report to a source access network device, where the first report includes identification information of a source cell for the redirection of the terminal device, and the source cell is managed by the source access network device.

With reference to the second aspect, in some implementations of the second aspect, the method further includes: adjusting a network configuration parameter based on the first report.

With reference to the second aspect, in some implementations of the second aspect, the first report indicates a reporting condition for triggering the terminal device to send the first report, and the reporting condition includes one or more of the following conditions:
that running duration of a first timer is less than or equal to a first threshold and greater than or equal to a second threshold, where the running duration of the first timer is duration from time when the terminal device receives a radio resource control RRC release message from the source access network device to time when the terminal device sends a random access preamble to the target access network device;
that running duration of a second timer is less than or equal to a third threshold and greater than or equal to a fourth threshold, where the running duration of the second timer is duration from the time when the terminal device receives the RRC release message from the source access network device to time when the terminal device receives an RRC connection setup message from the target access network device;
that running duration of a third timer is less than or equal to a fifth threshold and greater than or equal to a sixth threshold, where the running duration of the third timer is duration from time when the terminal device sends an RRC connection request message to the target access network device to the time when the terminal device receives the RRC connection setup message from the target access network device; or
that the terminal device fails to perform cell redirection on a first frequency, and successfully performs cell redirection on a frequency other than the first frequency, where the first frequency is a candidate frequency that is configured by the source access network device for the terminal device and that is used for the cell redirection, and a frequency of the target cell is the frequency other than the first frequency.

The source access network device manages the source cell for the cell redirection.

With reference to the second aspect, in some implementations of the second aspect, the second threshold is a product of the first threshold and a first coefficient, and/or the fourth threshold is a product of the third threshold and a second coefficient, and/or the sixth threshold is a product of the fifth threshold and a third coefficient, where the first coefficient, the second coefficient, and the third coefficient are less than 1.

With reference to the second aspect, in some implementations of the second aspect, the first report indicates one or more of the following:
the identification information of the source cell, the identification information of the target cell, cell measurement information, redirection frequency information, frequency information of the target cell, the running duration of the first timer, the running duration of the second timer, the running duration of the third timer, or running duration of a fourth timer.

The cell measurement information includes one or more of measurement information of the source cell, measurement information of the target cell, measurement information of a neighboring cell of the source cell, or measurement information of a neighboring cell of the target cell. The running duration of the fourth timer is duration from the time when the terminal device receives the RRC release message from the source access network device to time when the terminal device successfully establishes a service channel with the target access network device. Alternatively, the running duration of the fourth timer is duration from the time when the terminal device receives the RRC release message from the source access network device to time when the terminal device successfully communicates a service data packet with the target access network device.

With reference to the second aspect, in some implementations of the second aspect, the method further includes: sending first indication information to the terminal device, where the first indication information indicates the reporting condition.

With reference to the second aspect, in some implementations of the second aspect, the sending first indication information to the terminal device includes: sending an RRC message to the terminal device, where the RRC message includes the first indication information.

With reference to the second aspect, in some implementations of the second aspect, the first report further includes second indication information, and the second indication information indicates whether the cell redirection is triggered by a service or by signal coverage quality. Optionally, the service may be a voice service.

With reference to the second aspect, in some implementations of the second aspect, the redirection of the terminal device is triggered by the service, the target access network device and the source access network device use different radio access technologies RATs, and the source access network device manages the source cell for the cell redirection.

According to a third aspect, a communication method is provided. The method may be performed by a terminal device or a module (for example, a chip) disposed in (or used in) the terminal device.

The method includes: The terminal device fails to perform handover to a first cell. The terminal device establishes a communication connection to an access network device in a second cell, where the access network device manages the second cell. The terminal device sends a second report to the access network device, where the second report indicates that the terminal device fails to perform handover to the first cell, the second report includes fourth indication information, and the fourth indication information indicates that the handover of the terminal device to the first cell is triggered by a service or by signal coverage quality. Optionally, the service may be a voice service.

By way of example, and not limitation, the second report is a radio link failure report or a connection setup failure report.

According to the solution, after performing cell handover, the terminal device sends the second report to the network device, to notify the network device that the terminal device fails to perform handover to the first cell, so that the network device performs network parameter optimization with reference to the second report. The second report includes a handover cause indicating triggering of the cell handover. This can improve accuracy of the network parameter optimization, and reduce unnecessary or incorrect network parameter optimization.

With reference to the third aspect, in some implementations of the third aspect, the first cell and the second cell use a same radio access technology RAT.

For example, the terminal device performs inter-RAT network (or referred to as intersystem) cell handover from a source cell, and a source access network device indicates the terminal device to perform handover to the first cell whose RAT is different from that of the source cell. If the terminal device fails to perform handover to the first cell, the terminal device continues to perform cell selection in a network whose RAT (or system) is the same as that of a network in which the first cell is located, to attempt to access the network. In other words, the terminal device selects a cell whose RAT is the same as that of the first cell, for example, successfully selects a suitable cell, namely, a second cell whose RAT is the same as that of the first cell, and the terminal device establishes a communication connection to the access network device in the second cell. Therefore, the RAT of the second cell is the same as that of the first cell.

With reference to the third aspect, in some implementations of the third aspect, the first cell and the second cell use different radio access technologies RATs.

For another example, a source access network device indicates the terminal device to perform handover to the first cell whose RAT is different from that of the source cell. If the terminal device fails to perform handover to the first cell, the terminal device continues to perform cell selection in a network whose RAT (or system) is the same as that of a network in which the first cell is located, and selects a cell that meets a condition, to attempt to access the network device. If the service is a normal voice service, the to-be-met condition is a condition of a suitable cell. If the service is an emergency voice service, the to-be-met condition is a condition of a suitable cell and an acceptable cell. If the service is the emergency voice service, the terminal device first attempts to select the suitable cell, and if no suitable cell is selected, the terminal device may select the acceptable cell. However, the terminal device does not select the cell that meets the condition, and the terminal device reestablishes a connection to the source cell. In other words, in the example, the second cell is the source cell of the terminal device, and the RAT of the second cell is different from that of the first cell.

According to a fourth aspect, a communication method is provided. The method may be performed by an access network device or a module (for example, a chip) disposed in (or used in) the access network device.

The method includes: receiving a second report from a terminal device, where the second report indicates that the terminal device fails to perform handover to a first cell, the second report includes fourth indication information, and the fourth indication information indicates that the handover of the terminal device to the first cell is triggered by a service or by signal coverage quality.

According to a fifth aspect, a communication apparatus is provided. In a design, the apparatus may include modules that are in one-to-one correspondence with the methods/operations/steps/actions described in the first aspect. The module may be implemented by using a hardware circuit, software, or a combination of the hardware circuit and software. In a design, the apparatus includes:
a processing unit, configured to determine that a terminal device performs redirection from a source cell to a target cell, where the source cell is managed by a source access network device, and the target cell is managed by a target access network device; and
a transceiver unit, configured to send a first report, where the first report includes information indicating that a potential failure exists in a process of performing cell redirection by the terminal device, and includes identification information of the target cell.

With reference to the fifth aspect, in some implementations of the fifth aspect, the transceiver unit is specifically configured to send the first report when the cell redirection process meets a reporting condition. For the reporting condition, refer to the foregoing descriptions. For brevity, details are not described herein again.

With reference to the fifth aspect, in some implementations of the fifth aspect, the transceiver unit is further configured to receive first indication information, where the first indication information indicates the reporting condition.

With reference to the fifth aspect, in some implementations of the fifth aspect, the transceiver unit is specifically configured to receive an RRC message, where the RRC message includes the first indication information.

With reference to the fifth aspect, in some implementations of the fifth aspect, the first report indicates one or more of the following:
the reporting condition, identification information of the source cell, the identification information of the target cell, cell measurement information, a redirection frequency information, a frequency information of the target cell, running duration of a first timer, running duration of a second timer, running duration of a third timer, or running duration of a fourth timer.

The cell measurement information includes one or more of measurement information of the source cell, measurement information of the target cell, measurement information of a neighboring cell of the source cell, or measurement information of a neighboring cell of the target cell. The running duration of the fourth timer is duration from time when the terminal device receives an RRC release message from the source access network device to time when the terminal device successfully establishes a service channel with the target access network device. Alternatively, the running duration of the fourth timer is duration from time when the terminal device receives an RRC release message from the source access network device to time when the terminal device successfully communicates a service data packet with the target access network device.

With reference to the fifth aspect, in some implementations of the fifth aspect, the transceiver unit is specifically configured to send the first report to the target access network device.

With reference to the fifth aspect, in some implementations of the fifth aspect, the transceiver unit is specifically configured to send the first report to the source access network device, where the first report includes the identification information of the source cell.

With reference to the fifth aspect, in some implementations of the fifth aspect, the first report further includes second indication information, and the second indication information indicates whether the cell redirection is triggered by a service or by signal coverage quality. Optionally, the service may be a voice service.

With reference to the fifth aspect, in some implementations of the fifth aspect, that the terminal device sends the first report includes: The cell redirection is triggered by a voice service, and the target access network device and the source access network device use different radio access technologies RATs.

According to a sixth aspect, a communication apparatus is provided. In a design, the apparatus may include modules that are in one-to-one correspondence with the methods/operations/steps/actions described in the second aspect. The module may be implemented by using a hardware circuit, software, or a combination of the hardware circuit and software. In a design, the apparatus includes: a transceiver unit, configured to receive a first report from a terminal device, where the first report includes information indicating that a potential failure exists in a process of performing cell redirection by the terminal device, and includes identification information of a target cell for the cell redirection, and the target cell is managed by a target access network device; and a processing unit, configured to determine, based on the first report, that the potential failure exists in the process of performing cell redirection by the terminal device.

With reference to the sixth aspect, in some implementations of the sixth aspect, the transceiver unit is further configured to send the first report to a source access network device, where the first report includes identification information of a source cell for the cell redirection, and the source cell is managed by the source access network device.

With reference to the sixth aspect, in some implementations of the sixth aspect, the processing unit is further configured to adjust a network configuration parameter based on the first report.

With reference to the sixth aspect, in some implementations of the sixth aspect, the first report indicates a reporting condition for triggering the terminal device to send the first report. For the reporting condition, refer to the foregoing descriptions. For brevity, details are not described herein again.

With reference to the sixth aspect, in some implementations of the sixth aspect, the first report indicates one or more of the following:
the identification information of the source cell, the identification information of the target cell, cell measurement information, a redirection frequency information, a frequency of the target cell, running duration of a first timer, running duration of a second timer, running duration of a third timer, or running duration of a fourth timer.

The cell measurement information includes one or more of measurement information of the source cell, measurement information of the target cell, measurement information of a neighboring cell of the source cell, or measurement information of a neighboring cell of the target cell. The running duration of a fourth timer is duration from time when the terminal device receives an RRC release message from the source access network device to time when the terminal device successfully establishes a service channel with the target access network device. Alternatively, the running duration of a fourth timer is duration from time when the terminal device receives an RRC release message from the source access network device to time when the terminal device successfully communicates a service data packet with the target access network device.

With reference to the sixth aspect, in some implementations of the sixth aspect, the transceiver unit is further configured to send first indication information to the terminal device, where the first indication information indicates the reporting condition.

With reference to the sixth aspect, in some implementations of the sixth aspect, the transceiver unit is specifically configured to send an RRC release message to the terminal device, where the RRC release message includes the first indication information.

With reference to the sixth aspect, in some implementations of the sixth aspect, the first report further includes second indication information, and the second indication information indicates whether the cell redirection is triggered by a service or by a measurement result. Optionally, the service may be a voice service.

With reference to the sixth aspect, in some implementations of the sixth aspect, the cell redirection is triggered by the service, the target access network device and the source access network device use different radio access technologies RATs, and the source access network device manages the source cell for the cell redirection.

According to a seventh aspect, a communication apparatus is provided. In a design, the apparatus may include modules that are in one-to-one correspondence with the methods/operations/steps/actions described in the third aspect. The module may be implemented by using a hardware circuit, software, or a combination of the hardware circuit and software. In a design, the apparatus includes: a processing unit, configured to determine that a terminal device fails to perform handover to a first cell, where the processing unit is further configured to determine that the terminal device establishes a communication connection to a second cell; and a transceiver unit, configured to send a second report to an access network device, where the second report indicates that the terminal device fails to perform handover to the first cell, the second report includes fourth indication information, the fourth indication information indicates that the handover of the terminal device to the first cell is triggered by a service or by signal coverage quality, and the second cell is managed by the access network device.

According to an eighth aspect, a communication apparatus is provided. In a design, the apparatus may include modules that are in one-to-one correspondence with the methods/operations/steps/actions described in the fourth aspect. The module may be implemented by using a hardware circuit, software, or a combination of the hardware circuit and software. In a design, the apparatus includes: a transceiver unit, configured to receive a second report from a terminal device, where the second report indicates that the terminal device fails to perform handover to a first cell, the second report includes fourth indication information, the fourth indication information indicates that the handover of the terminal device to the first cell is triggered by a service or by signal coverage quality, and a second cell is a cell managed by an access network device; and a processing unit, configured to determine, based on the fourth indication information, that the handover of the terminal device to the first cell is triggered by the service or by the signal coverage quality.

According to a ninth aspect, a communication apparatus is provided. The communication apparatus includes a processor. The processor may implement the method in any one of the first aspect, the third aspect, or the possible implementations of the first aspect or the third aspect. Optionally, the communication apparatus further includes a memory. The processor is coupled to the memory, and may be configured to execute instructions in the memory, to implement the method in any one of the first aspect, the third aspect, or the possible implementations of the first aspect or the third aspect. Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a terminal device. When the communication apparatus is the terminal device, the communication interface may be a transceiver or an input/output interface.

In another implementation, the communication apparatus is a chip disposed in a terminal device. When the communication apparatus is the chip disposed in the terminal device, the communication interface may be an input/output interface.

Optionally, the transceiver may be a transceiver circuit. Optionally, the input/output interface may be an input/output circuit.

According to a tenth aspect, a communication apparatus is provided. The communication apparatus includes a processor. The processor may implement the method in any one of the second aspect, the fourth aspect, or the possible implementations of the second aspect or the fourth aspect. Optionally, the communication apparatus further includes a memory. The processor is coupled to the memory, and may be configured to execute instructions in the memory, to implement the method in any one of the second aspect, the fourth aspect, or the possible implementations of the second aspect or the fourth aspect. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip disposed in the network device. When the communication apparatus is the chip disposed in the network device, the communication interface may be an input/output interface.

Optionally, the transceiver may be a transceiver circuit. Optionally, the input/output interface may be an input/output circuit.

According to an eleventh aspect, a processor is provided. The processor includes an input circuit, an output circuit, and a processing circuit. The processing circuit is configured to receive a signal through the input circuit, and transmit a signal through the output circuit, so that the processor performs the method in any one of the first aspect to the fourth aspect or the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is respectively used as the input circuit and the output circuit at different moments. Specific implementations of the processor and the various circuits are not limited in embodiments of this application.

According to a twelfth aspect, a computer program product is provided. The computer program product includes a computer program (which may also be referred to as code or instructions). When the computer program is run on a computer, the computer is enabled to perform the method in any one of the first aspect to the fourth aspect or the possible implementations of the first aspect to the fourth aspect.

According to a thirteenth aspect, a computer-readable storage medium is provided. The computer-readable storage medium stores a computer program (which may also be referred to as code or instructions). When the computer program is run on a computer, the computer is enabled to perform the method in any one of the first aspect to the fourth aspect or the possible implementations of the first aspect to the fourth aspect.

According to a fourteenth aspect, a communication system is provided. The communication system includes at least one communication apparatus provided in the fifth aspect and at least one communication apparatus provided in the sixth aspect, and/or includes at least one communication apparatus provided in the seventh aspect and at least one communication apparatus provided in the eighth aspect.

### BRIEF DESCRIPTION OF DRAWINGS

FIG. 1 is a diagram of a communication system according to an embodiment of this application;
FIG. 2 is a schematic flowchart of a communication method according to an embodiment of this application;
FIG. 3 is a schematic flowchart of a cell redirection process according to an embodiment of this application;
FIG. 4 is a schematic flowchart of a communication method according to an embodiment of this application;
FIG. 5 is another schematic flowchart of a communication method according to an embodiment of this application;
FIG. 6 is another schematic flowchart of a communication method according to an embodiment of this application;
FIG. 7 is another schematic flowchart of a communication method according to an embodiment of this application;
FIG. 7A is another schematic flowchart of a communication method according to an embodiment of this application;
FIG. 7B is another schematic flowchart of a communication method according to an embodiment of this application;
FIG. 8 is a block diagram of a communication apparatus according to an embodiment of this application;
FIG. 9 is a diagram of a structure of a terminal device according to an embodiment of this application; and
FIG. 10 is a diagram of a structure of a network device according to an embodiment of this application.

### DESCRIPTION OF EMBODIMENTS

The following describes the technical solutions of this application with reference to the accompanying drawings.

In embodiments of this application, "/" may represent an "or" relationship between associated objects. For example, A/B may represent A or B. "and/or" may be used to describe three relationships between associated objects. For example, A and/or B may represent the following three cases: Only A exists, both A and B exist, and only B exists, where A and B may be singular or plural. For ease of describing the technical solutions of embodiments of this application, in embodiments of this application, the words such as "first" and "second" may be used for differentiation. The words such as "first" and "second" do not limit a quantity and an execution sequence, and the words such as "first" and "second" do not limit a definite difference. In embodiments of this application, the word such as "example" or "for example" represents an example, evidence, or a description. Any embodiment or design solution described as "example" or "for example" should not be explained as being more preferred or having more advantages than another embodiment or design solution. The word such as "example" or "for example" is used to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5^{th} generation (5th generation, 5G) communication system. In addition, the communication method provided in this application may also be applied to a communication system in a future evolved public land mobile network (public land mobile network, PLMN), another communication system, or the like. This is not limited in this application.

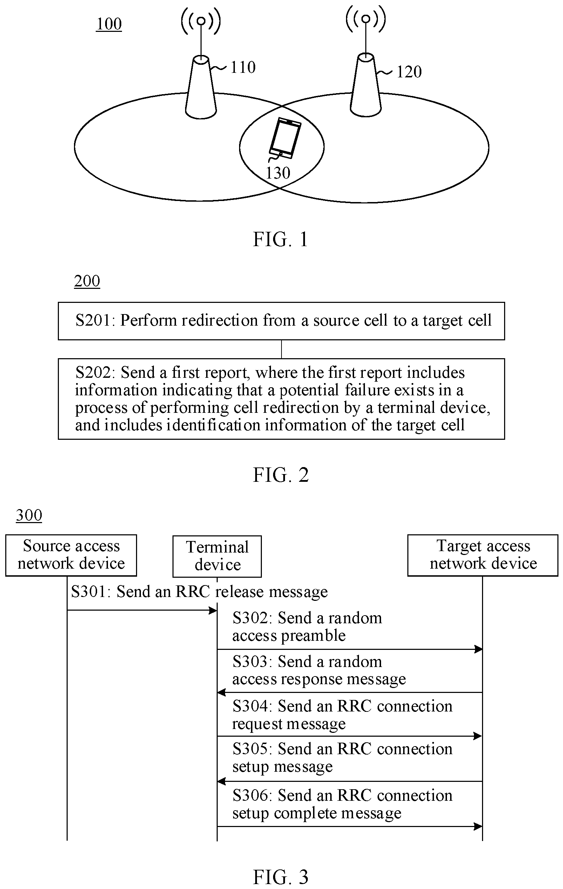

FIG. 1 is a diagram of a wireless communication system 100 applicable to an embodiment of this application.

As shown in FIG. 1, the wireless communication system 100 may include at least two access network devices, for example, an access network device 110 and an access network device 120 shown in FIG. 1. The wireless communication system 100 may further include at least one terminal device, for example, a terminal device 130 shown in FIG. 1. One access network device may manage at least one cell. For example, the access network device 110 manages a cell 1, and the access network device 120 manages a cell 2. When a terminal device enters a coverage area of a cell, the terminal device may access the cell, and communicate, by using the cell, with an access network device that manages the cell. For example, the terminal device 130 enters a coverage area of the cell 1. The terminal device 130 may access the cell 1, and obtain a communication service of the access network device 110 by using the cell 1. In other words, the cell 1 is used as a serving cell of the terminal device. Cell handover or redirection may occur in a movement process of the terminal device. For example, when the terminal device moves into a coverage area of the cell 2 and signal quality of the cell 2 is good, the terminal device may perform handover or redirection from the cell 1 to the cell 2. The terminal device disconnects from the cell 1, and accesses the cell 2. Alternatively, handover or redirection of the terminal device from the cell 1 to the cell 2 may be triggered by a service. For example, the access network device 110 and the access network device 120 use different radio access technologies. Handover or redirection of the terminal device from the cell 1 to the cell 2 may be triggered by a voice service.

In a scenario in which the terminal device performs handover from the cell 1 to the cell 2, after exchanging information with the access network device 120, the access network device 110 indicates the terminal device to perform handover to the cell 2, and provides related access information of the cell 2 for the terminal device 130. The terminal device accesses the cell 2 based on an indication of the access network device 110, and obtains a communication service of the access network device 120 by using the cell 2. In other words, the cell 2 is used as a serving cell of the terminal device. In this way, the handover from the cell 1 to the cell 2 is completed. The cell 1 may be referred to as a source cell for the handover of the terminal device, and the cell 2 may be referred to as a target cell for the handover of the terminal device.

In a scenario in which the terminal device performs redirection from the cell 1 (which may be referred to as a source cell for the redirection) to the cell 2 (which may be referred to as a target cell for the redirection), the terminal device may perform cell selection on a candidate frequency provided by the access network device 110, access the cell 2 after determining that the cell 2 is used as the target cell for the redirection, and obtain a communication service of the access network device 120 by using the cell 2. In other words, the cell 2 is used as a serving cell of the terminal device. In this way, the redirection from the cell 1 to the cell 2 is completed.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a vehicle-mounted device, a wearable device, a terminal device in a future evolved PLMN, or the like.

It should be understood that a specific form of the terminal device is not limited in embodiments of this application.

The access network node in embodiments of this application may be a device having a wireless transceiver function, or may be referred to as an access network device or a network device. The device includes but is not limited to a device having a part or all of functions of a base station, for example, an evolved NodeB (evolved NodeB, eNodeB), a next generation NodeB (next generation NodeB, gNB) in a 5^{th} generation (5th generation, 5G) mobile communication system, a next generation NodeB in a 6^{th} generation (6th generation, 6G) mobile communication system, a base station in a future mobile communication system, a transmission reception point (transmission reception point, TRP), or an access point (access point, AP), a wireless relay node, or a wireless backhaul node in a wireless fidelity (wireless fidelity, Wi-Fi) system.

In some deployments, the access network node may include a central unit (central unit, CU) and/or a distributed unit (distributed unit, DU). The CU and the DU may separately implement a part of functions of a base station. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The access network node may further include an active antenna unit (active antenna unit, AAU). The AAU may implement a part of physical layer processing functions, radio frequency processing, and a function related to an active antenna.

The following first describes related technologies and terms in embodiments of this application.

### 1. Cell and carrier

The cell may be understood as a coverage area of a radio signal identified by a cell identity. From a perspective of resource management, the cell is a unit used by a network device to manage a wireless communication resource. A physical layer resource of the cell includes a carrier, where the carrier is a physical resource used to carry a radio signal of the access network device, the carrier is represented by a carrier frequency and bandwidth of a carrier frequency band, the carrier may be referred to as an operating carrier of the cell, and the carrier frequency may be referred to as an operating frequency of the cell.

### 2. Cell selection

A terminal device may perform cell selection on a candidate frequency (or referred to as a candidate cell frequency) through frequency scanning. To be specific, the terminal device detects a synchronization signal of a cell on the candidate frequency through frequency scanning, and obtains signal quality of the cell based on the detected synchronization signal, to determine whether to access the cell.

### 3. Cell handover

An access network device (namely, a source access network device) connected to a terminal device determines, based on a measurement result, a target cell to which the terminal device is to perform handover, performs information exchange (such as resource requesting and data forwarding) with a target access network device that manages the target cell to complete handover preparation, and uses a handover command to indicate the terminal device to perform handover to the target cell. After the terminal device successfully accesses the target cell, the target access network device notifies the source access network device to release a resource of the terminal device.

### 4. Cell redirection

A process in which a source access network device may configure one or more candidate frequencies for cell redirection when a terminal device is in a connected state, and after receiving a radio resource control (radio resource control, RRC) release message from the source access network device in a source cell, the terminal device performs cell selection on the one or more candidate frequencies, selects a target cell, and accesses the cell is referred to as a cell redirection process of redirection from the source cell to the target cell. The cell redirection of the terminal device may be triggered by signal coverage quality. For example, the network device may determine coverage of a serving cell and/or coverage of a neighboring cell of the serving cell based on a measurement result reported by the terminal device, to trigger the redirection of the terminal device. For example, the network device determines, based on the measurement result reported by the terminal device, that signal quality of the serving cell is poor, for example, determines that the signal quality of the serving cell is less than a preset threshold or the signal quality of the serving cell is poorer than signal quality of the neighboring cell, to determine that the signal coverage quality of the serving cell is poor, so as to trigger the redirection of the terminal device. Alternatively, the network device determines, based on a measurement result reported by the terminal device, that signal quality of the neighboring cell is good, for example, determines, based on a measurement report, that the signal quality of the neighboring cell is better than that of the serving cell, or the signal quality of the neighboring cell is greater than a preset threshold, to determine that the signal quality of the neighboring cell is good. Alternatively, the cell redirection of the terminal device may be triggered by a voice service.

A difference between the cell redirection and cell handover lies in that, in the cell handover, a target cell to which the terminal device performs handover is indicated to the terminal device after the source access network device interacts with a target access network device, and the terminal device accesses the target cell based on related information of the target cell provided by the source access network device; in the cell redirection, the source access network device provides the candidate frequency for the terminal device, and the target cell for the redirection of the terminal device is selected after the terminal device performs cell selection on the candidate frequency.

### 5. Voice service

The voice service is one of core services of a mobile communication network. Since the 4^{th} generation (4^{th} generation, 4G) mobile communication network internet protocol (internet protocol, IP) era, a packet switched (packet switched, PS) domain is replaced by a circuit switched (circuit switched, CS) domain, and a main voice policy includes voice over LTE (voice over LTE, VoLTE) based on an IP multimedia subsystem (IP multimedia subsystem, IMS) and CS fallback (CS fallback). In a 5G mobile communication network, if an NR cell (namely, a cell using an NR radio access technology) connected to a terminal device does not support an IMS-based voice over NR (voice over NR, VoNR) policy, the network may indicate the terminal device to perform cell handover or cell redirection to fall back (voice fallback) to a cell in a 4G network to complete a voice service. If quality of a VoNR service of the terminal device in the connected NR cell is not ideal, an access network device in the 5G network to which the terminal device is currently connected may indicate the terminal device to perform cell handover or cell redirection, and the terminal device connects to an access network device in the 4G network by performing cell handover or cell redirection, to complete the voice service in the cell in the 4G network. After the voice service is ended, the terminal device returns to the NR cell through a fast return (fast return) mechanism. The voice service may be a normal voice service or an emergency voice service. In an implementation, "service" in this application may be understood as "voice service".

### 6. Suitable cell (suitable cell) and acceptable cell (acceptable cell) in a cell selection process

The suitable cell is a cell on which a terminal device may camp and obtain a normal service. The suitable cell needs to meet the following requirements:
- The cell is a part of a selected PLMN, a registered PLMN, or an equivalent PLMN.
- The cell is not barred.
- The cell is not a part of a list of "forbidden tracking areas for roaming".
- The cell satisfies cell selection criteria.

The acceptable cell is a cell on which a terminal device may camp and obtain a restricted service. The acceptable cell needs to meet the following requirements:
- The cell is not barred.
- The cell satisfies cell selection criteria.

The foregoing requirements of the acceptable cell are minimum requirements for initiating an emergency call and receiving earthquake and tsunami warning system (earthquake and tsunami warning system, ETWS) and commercial mobile alert system (commercial mobile alert system, CMAS) notifications in an NR network.

The following describes communication methods provided in embodiments of this application with reference to the accompanying drawings.

FIG. 2 is a schematic flowchart of a communication method 200 according to an embodiment of this application.

S201: A terminal device performs redirection from a source cell to a target cell.

The source cell is managed by a source access network device, and the target cell is managed by a target access network device. It should be noted that, in this embodiment of this application, the source cell for the cell redirection is a serving cell before the terminal device performs cell redirection, and the target cell is a cell in which the terminal device accesses a network through cell redirection, namely, a serving cell after the cell redirection.

In an implementation, the cell redirection of the terminal device is triggered by a voice service.

For example, a serving cell of the terminal device is an NR cell, and a 5G network in which the NR cell is located does not support a VoNR policy, and cannot provide a voice service for the terminal device. When the terminal device has to-be-sent voice service data or to-be-received voice service data, the source access network device indicates the terminal device to fall back to a cell in a 4G network through cell redirection, to complete voice service data transmission. Specifically, the source access network device may send an RRC release message to the terminal device, and indicate, by using the RRC release message, the terminal device to perform cell redirection. The RRC release message further indicates one or more candidate frequencies for performing cell redirection by the terminal device, and the candidate frequency indicated by the RRC release message is an evolved universal mobile telecommunications system (universal mobile telecommunications system, UMTS) terrestrial radio access (evolved-UMTS terrestrial radio access, E-UTRA) frequency of the 4G network. E-UTRA is an access network technology in the 4G network. The E-UTRA frequency is a 4G radio access frequency, namely, a working frequency of a cell in the 4G network. The cell in the 4G network may be referred to as an E-UTRA cell, namely, a cell using the E-UTRA technology. The terminal device performs cell selection on the E-UTRA candidate frequency, to access the 4G network by using the cell in the 4G network, so as to perform voice service data transmission. Alternatively, if a network in which the source cell is located supports VoNR, but quality of a voice service of the terminal device in the cell supporting the VoNR does not meet a service requirement, the source access network device may indicate the terminal device to perform cell redirection. This is not limited in this application.

In another implementation, the cell redirection of the terminal device is triggered by signal coverage quality.

For example, when the source cell is a serving cell of the terminal device, the terminal device may measure signal quality of a nearby cell (which may be referred to as a neighboring cell), and send a measurement report to the source access network device to notify the source access network device of a measurement result of the signal quality of the neighboring cell. The source access network device may determine, based on the measurement result, that signal coverage quality of the source cell is poor or that the signal coverage quality of the neighboring cell is good, to indicate the terminal device to perform cell redirection. Specifically, the source access network device may indicate, by using an RRC release message, the terminal device to perform cell redirection. The RRC release message further indicates one or more candidate frequencies for performing cell redirection by the terminal device. The one or more candidate frequencies may be referred to as a redirection frequency. Optionally, the candidate frequency may include a frequency of the neighboring cell whose signal quality is better than that of the source cell. The terminal device performs cell selection on the candidate frequency, to re-access a cell. However, this application is not limited thereto. A measurement result for triggering the cell redirection may be signal quality of the source cell obtained by the terminal device through measurement. When the signal quality of the source cell does not meet a quality of service requirement, or when the signal quality of the neighboring cell of the source cell is good, the source access network device may indicate the terminal device to perform cell redirection.

For example, a cell redirection process in which the terminal device performs redirection from the source cell to the target cell may be shown in FIG. 3. In S301, the source access network device sends an RRC release message to the terminal device, where the RRC release message indicates that an RRC connection between the terminal device and the network is released, and further indicates the terminal device to perform cell redirection. The RRC release message may include information about the candidate frequency for performing cell redirection by the terminal device, and the terminal device selects the cell for the redirection on the candidate frequency indicated by the source access network device. In S302, after determining the target cell, the terminal device sends a random access preamble to the target access network device. In S303, when receiving the random access preamble, the target access network device sends a random access response message to the terminal device, so that the terminal device communicates with the target access network device in the target cell. In S304, the terminal device continues to send an RRC connection request message to the target access network device, to request to establish a radio resource control connection to the network. The target access network device determines, based on the RRC connection request message, whether to allow the terminal device to access the network. If the target access network device allows the terminal device to access the network, in S305, the target access network device sends an RRC connection setup message to the terminal device, and configures a corresponding RRC resource for the terminal device by using the RRC connection setup message. After completing the resource configuration, in S306, the terminal device sends an RRC connection setup complete message to the target access network device. The terminal device reestablishes the RRC connection to the network, and completes the cell redirection process of redirection from the source cell to the target cell.

S202: The terminal device sends a first report, where the first report includes information indicating that a potential failure exists in a process of performing redirection by the terminal device, and includes identification information of the target cell.

The first report may indicate information about a cause for performing a cell change by the terminal device. For example, the information about the cause may indicate that the cause may be a voice service fallback, or the cause may be a normal (normal) voice service fallback or an emergency voice service fallback.

After the terminal device successfully performs redirection from the source cell to the target cell, if a potential failure risk exists in the process in which the terminal device performs redirection from the source cell to the target cell, the terminal device sends the first report to notify the network of the potential failure risk in the cell redirection process, so that the network can perform network parameter optimization with reference to the first report of the terminal device, to improve network performance and reduce a probability of occurrence of a mobility failure event.

In an example, the first report may be referred to as a redirection success report.

In another example, the first report may be referred to as a random access report, where the first report further indicates that a cause for random access between the terminal device and the target cell is that the random access is triggered by a service.

For example, the first report indicates that the cause for the random access between the terminal device and the target cell is that the random access is triggered by the service, and the first report further indicates the information that the potential failure exists in the process of performing cell redirection by the terminal device.

In still another example, the first report may be referred to as a connection setup failure report, where the first report indicates that a connection between the terminal device and a third-party access network device (the third-party access network device is an access network device other than the source access network device and the target access network device) fails to be established.

For example, the terminal device fails to perform cell redirection on a first frequency in the redirection frequency. Specifically, the terminal device attempts to establish a connection to the third-party access network device on the first frequency. For example, the terminal device attempts to access the third-party access network device, but the connection fails to be established. The terminal device records the first report, where the first report indicates that the connection between the terminal device and the third-party access network device fails to be established. Optionally, the first report may alternatively indicate information indicating that a failure exists in the process of performing cell redirection by the terminal device.

It should be noted that, that the terminal device sends the first report to the network may be that the terminal device sends the first report to the target access network device, and/or may be that the terminal device sends the first report to the source access network device. The first report sent by the terminal device to an access network device (for example, the target access network device and/or the source access network device) may be transmitted to the access network device via another network device in the network. This is not limited in this application. For example, after establishing a communication connection to the target access network device, the terminal device moves into another cell and accesses a third-party access network device that manages the another cell. The third-party access network device is an access network device other than the target access network device and the source access network device. The terminal device may send the first report to the third-party access network device. After receiving the first report, the third-party access network device forwards the first report to a target device of the first report. Specifically, that the target device of the first report is the target access network device and/or the source access network device may be indicated by using, but not limited to, the first report. That the third-party access network device forwards the first report to the target device may be that the third-party access network device forwards the first report to the target device through a communication interface between the third-party access network device and the target device, or may be that the third-party access network device sends the first report to another network device and forwards the first report to the target device through relay of one or more network devices. This is not limited in this application.

In this application, that the potential failure exists in the cell redirection process includes: Although the terminal device successfully performs cell redirection, some parameter values related to the cell redirection process may be about to meet but have not met a condition for a cell redirection failure. In this way, the terminal device determines that the potential failure risk exists in the cell redirection process.

Optionally, when the cell redirection process meets a reporting condition, the terminal device records the first report.

In an implementation, the network device sends first indication information to the terminal device, where the first indication information indicates the reporting condition. Optionally, an RRC message sent by the network device to the terminal device includes the first indication information. By way of example, and not limitation, the RRC message may be an RRC release message.

The reporting condition includes, but is not limited to, one or more of the following conditions 1 to 4.

Condition 1: Running duration of a first timer is less than or equal to a first threshold and greater than or equal to a second threshold, where the running duration of the first timer is duration from time when the terminal device receives an RRC release message from the source access network device to time when the terminal device sends a random access preamble to the target access network device.

The first timer in the condition 1 is used to determine whether the terminal device successfully selects the cell for the redirection. The terminal device starts the first timer after receiving the RRC release message from the source access network device, and stops the first timer after the terminal device sends the random access preamble to the target access network device. If the running duration of the first timer is greater than the first threshold, and the terminal device does not select a cell that can access the network, the terminal device considers that the cell redirection fails, and the terminal device may attempt to reestablish a connection to the source cell, or enter an idle state.

When the reporting condition for recording the first report by the terminal device includes the condition 1, if the terminal device successfully selects the target cell for the redirection when the running duration of the first timer is less than or equal to the first threshold, but the running duration of the first timer is greater than or equal to the second threshold, the terminal device may consider that time for performing cell selection in the cell redirection process is long, and a risk that the cell redirection fails because the terminal device fails to select the cell exists. Therefore, the terminal device may record the first report to the network, to notify the network of a case of the potential failure in the cell redirection process of the terminal device, so that the network performs network parameter optimization.

Optionally, the first report further indicates that the reporting condition for triggering recording of the first report includes the condition 1.

For example, the first report may include indication information indicating that the reporting condition for triggering recording of the first report includes the condition 1. For example, the indication information may be identification information of the condition 1, to notify the network that the condition 1 triggers recording of sending of the first report by the terminal device, so that the network may determine, based on the first report, that the time for the terminal device to perform cell selection in the cell redirection process is long and the case of the potential failure may exist, to perform corresponding network parameter optimization.

Optionally, the first report further indicates the running duration of the first timer.

The terminal device notifies the network of the running duration of the first timer by using the first report, so that the network can determine, based on the running duration of the first timer, that the time for the terminal device to perform cell selection in the cell redirection process is long and the case of the potential failure may exist, to perform corresponding network parameter optimization.

Alternatively, the first report may indicate both the reporting condition 1 and the running duration of the first timer, so that after obtaining the reporting condition including the condition 1 and the running duration of the first timer, the network determines that the time for the terminal device to perform cell selection in the cell redirection process is long and the case of the potential failure may exist, to perform corresponding network parameter optimization.

Condition 2: Running duration of a second timer is less than or equal to a third threshold and greater than or equal to a fourth threshold, where the running duration of the second timer is duration from the time when the terminal device receives the RRC release message from the source access network device to time when the terminal device receives an RRC connection setup message from the target access network device.

The second timer in the condition 2 is used to determine whether the terminal device successfully performs redirection to the target cell. The terminal device starts the second timer after receiving the RRC release message from the source access network device, and stops the second timer after receiving the RRC connection setup message from the target access network device. If the running duration of the second timer is greater than the third threshold, and the terminal device still does not receive the RRC connection setup message, the terminal device considers that the cell redirection to the target cell fails, and the terminal device may select another cell to access the network.

When the reporting condition for recording the first report by the terminal device may include the condition 2, if the terminal device successfully performs redirection to the target cell when the running duration of the second timer is less than or equal to the third threshold, but the running duration of the second timer is greater than or equal to the fourth threshold, the terminal device may consider that time for the cell redirection to the target cell is long and the potential failure risk exists in the cell redirection process of redirection to the target cell. Therefore, the terminal device may record the first report, and send the first report to the network, to notify the network of the case of the potential failure in the cell redirection process of the terminal device, so that the network performs network parameter optimization.

Optionally, the first report further indicates that the reporting condition for triggering recording of the first report includes the condition 2 and/or the running duration of the second timer. For a specific implementation, refer to the descriptions in the condition 1. For brevity, details are not described herein again.

Condition 3: Running duration of a third timer is less than or equal to a fifth threshold and greater than or equal to a sixth threshold, where the running duration of the third timer is duration from time when the terminal device sends an RRC connection request message to the target access network device to the time when the terminal device receives the RRC connection setup message from the target access network device.

The third timer in the condition 3 is used to determine whether the RRC connection between the terminal device and the network in the target cell is successfully established. The terminal device starts the third timer after sending the RRC connection request message to the target access network device, and stops the third timer after receiving the RRC connection setup message from the target access network device. If the running duration of the third timer is greater than the fifth threshold, the terminal device still does not receive the RRC connection setup message from the target access network device, and the terminal device considers that the RRC connection fails to be established, the terminal device enters the idle state, or the terminal device attempts to reestablish a connection to the source cell.

The reporting condition for recording the first report by the terminal device may include the condition 3. If the terminal device successfully establishes the RRC connection to the network in the target cell when the running duration of the third timer is less than or equal to the fifth threshold, but the running duration of the third timer is greater than or equal to the sixth threshold, the terminal device may consider that time for establishing the RRC connection in the target cell is long and the failure risk exists in the cell redirection process of redirection to the target cell. Therefore, the terminal device may record the first report, and send the first report to the network, to notify the network of the case of the potential failure in the cell redirection process of the terminal device, so that the network performs network parameter optimization.

Optionally, the first report further indicates that the reporting condition for triggering recording of the first report includes the condition 3 and/or the running duration of the third timer. For a specific implementation, refer to the descriptions in the condition 1. For brevity, details are not described herein again.

One or more of the first threshold, the second threshold, the third threshold, the fourth threshold, the fifth threshold, or the sixth threshold may be predefined in a protocol, or may be configured by the source access network device for the terminal device. For example, the source access network device may notify the terminal device of one or more of the second threshold, the fourth threshold, or the sixth threshold by using an RRC release message.

The source access network device may directly indicate a value of a threshold of a timer, or may predefine a plurality of candidate values of one threshold and identification information of each candidate value. The source access network device notifies, by indicating identification information of one candidate value, the terminal device that the value of the threshold of the timer is a candidate value corresponding to the identification information.

For example, for one timer, four candidate values of a threshold of the timer and identification information of each candidate value may be defined through predefinition in the protocol or preconfiguration by the network device. For example, the four candidate values are respectively T0, T1, T2, and T3, and a unit of the candidate value may be microsecond, millisecond, or second. Identification information of T0 is 0, identification information of T1 is 1, identification information of T2 is 2, and identification information of T3 is 3. The source access network device may perform indication by using an RRC message. For example, the RRC message may be an RRC release message. The RRC release message may include an indication whose length is 2 bits, and the indication indicates identification information of one of the four candidate values. For example, the indication indicates that identification information is 2. In this case, after receiving the RRC release message, the terminal device may determine that the threshold of the timer is the candidate value T2 corresponding to the identification information 2.

In an implementation, the source access network device may indicate one or more of the following first coefficient, second coefficient, or third coefficient, to notify the terminal device of a value of a corresponding threshold.

Optionally, the second threshold is a product of the first threshold and the first coefficient, and/or the fourth threshold is a product of the third threshold and the second coefficient, and/or the sixth threshold is a product of the fifth threshold and the third coefficient, where the first coefficient, the second coefficient, and the third coefficient are less than 1.

The first threshold, the third threshold, and the fifth threshold may be notified by the source access network device to the terminal device. If the reporting condition includes the condition 1, the source access network device may notify the terminal device of the first coefficient, and the terminal device determines a value of the second threshold based on the first threshold and the first coefficient. Similarly, if the reporting condition includes the condition 2, the source access network device may notify the terminal device of the second coefficient. If the reporting condition includes the condition 3, the source access network device may notify the terminal device of the third coefficient.

For example, the coefficient corresponding to the threshold may be a percentage. For example, the reporting condition includes the condition 1, and in this case, the source access network device sends an RRC message to the terminal device. For example, the RRC message may be an RRC release message, and the RRC release message indicates that a value of the first coefficient is 90%. In this case, the terminal device obtains the value of the first coefficient based on the RRC release message, and may determine the second threshold based on the first coefficient and the first threshold. That is, the second threshold is 90% of the first threshold. The source access network device may notify the terminal device of the coefficients corresponding to the fourth threshold and the sixth threshold in a similar manner. However, this application is not limited thereto. The coefficient may be represented as a decimal or a fraction.

Condition 4: The terminal device fails to perform cell redirection on a first frequency, and successfully performs cell redirection on a frequency other than the first frequency, where the first frequency is a candidate frequency that is configured by the source access network device for the terminal device and that is used for the cell redirection, and a frequency of the target cell is the frequency other than the first frequency.

The reporting condition for recording the first report by the terminal device may include the condition 4. If the terminal device fails to perform cell redirection on the candidate frequency configured by the source access network device for the terminal device, and successfully performs cell redirection on the frequency other than the first frequency, the terminal device needs to record the first report, and the terminal device may send the first report to the network, to notify the network of the potential failure risk in the cell redirection process of the terminal device.

In an implementation, both the first frequency and the frequency of the target cell are candidate frequencies configured by the source access network device for the terminal device to perform cell redirection. In other words, the source access network device configures a plurality of candidate frequencies for the terminal device, and the plurality of candidate frequencies include the first frequency and the frequency of the target cell. After failing to perform cell redirection on the first frequency, the terminal device performs cell redirection on another candidate frequency (namely, the frequency of the target cell) and successfully performs redirection to the target cell.

In another implementation, the first frequency is the candidate frequency configured by the source access network device for the terminal device to perform cell redirection. The frequency of the target cell may be a frequency other than the candidate frequency configured by the source access network device for the terminal device. In other words, the candidate frequency configured by the source access network device for the terminal device includes the first frequency but does not include the frequency of the target cell. After failing to perform cell redirection on the candidate frequency, the terminal device performs cell redirection on the frequency other than the candidate frequency, and successfully performs redirection to the target cell.

Optionally, the first report further indicates that the reporting condition for triggering recording of the first report includes the condition 4 and/or the first frequency.

For example, the first report may include indication information indicating that the reporting condition includes the condition 4, to notify the network of a case in which a cell redirection failure of the terminal device occurs on the candidate frequency configured by the network, so that the network performs network parameter optimization.

For another example, the first report may include indication information indicating that the reporting condition includes the first frequency, to notify the network of the first frequency on which the terminal device fails to perform cell redirection, so that the network can obtain information about the frequency on which the terminal device fails to perform cell redirection, and perform targeted network parameter optimization.

Optionally, the first report further indicates one or more of the following:
identification information of the source cell, the identification information of the target cell, cell measurement information, redirection frequency information, the frequency information of the target cell, indication information indicating whether a suitable cell exists, indication information indicating whether an acceptable cell exists, the running duration of the first timer, the running duration of the second timer, the running duration of the third timer, or running duration of a fourth timer.

The cell measurement information includes one or more of measurement information of the source cell, measurement information of the target cell, measurement information of neighboring cell of the source cell, or measurement information of a neighboring cell of the target cell.

For example, the cell measurement information may be a measurement result of a cell. Optionally, the cell measurement information further includes measurement information of a cell other than the source cell and the target cell. For example, the terminal device performs cell signal quality measurement on the candidate frequency, and the cell measurement information may include a measurement result of a cell obtained by the terminal device through measurement. For another example, the terminal device fails to perform cell reestablishment on the first frequency, and the cell measurement information may include a measurement result obtained by the terminal device through measurement of a cell on the first frequency.

The running duration of the fourth timer is duration from the time when the terminal device receives the RRC release message from the source access network device to time when the terminal device successfully establishes a service channel with the target access network device, or duration from the time when the terminal device receives the RRC release message from the source access network device to time when the terminal device successfully communicates a service data packet with the target access network device. The terminal device starts the fourth timer after receiving the RRC release message from the source access network device, and the terminal device performs redirection from the source cell to the target cell. The terminal device stops the fourth timer after successfully establishing the service channel with the target access network device or the terminal device successfully communicates the service data packet with the target access network device. The obtained running duration of the fourth timer may be referred to as service interruption duration.

For example, the source access network device indicates, by using the RRC release message, the terminal device to fall back to a cell in the 4G network through cell redirection, to complete voice service data transmission. After receiving the RRC release message, the terminal device starts the fourth timer, and performs cell redirection. The terminal device successfully performs redirection to the target cell. The target cell is a cell managed by an eNodeB in the 4G network, in other words, the target access network device is the eNodeB in the 4G network. The terminal device initiates a tracking area update (tracking area update, TAU) process to the eNodeB. An LTE network coverage area is divided into a plurality of tracking areas to determine a location of the terminal device, and the tracking area is a basic unit for location update and paging of the terminal device in an LTE network. After the terminal device and the eNodeB complete the TAU process, the terminal device establishes a VoLTE service channel with the eNodeB, and after the VoLTE service channel is successfully established, the terminal device stops the fourth timer. The running duration of the fourth timer is voice service interruption duration, and the first report sent by the terminal device may include the running duration of the fourth timer, so that the network can obtain voice service interruption duration in a specific cell redirection process of the terminal device, to perform targeted network parameter optimization.

Optionally, that the terminal device sends the first report includes: The terminal device sends the first report to the source access network device, where the first report includes the identification information of the source cell. Alternatively, the terminal device sends the first report to the target access network device. Optionally, as a receive end of the first report, the source access network device or the target access network device may receive the first report via another network device. In other words, the terminal device sends the first report to the another network device, and then the another network device forwards the first report to the source access network device or the target access network device. In addition, the source access network device or the target access network device may further send the received first report to another network device. It may be understood that, for the source access network device, the target access network device is the another network device; and for the target access network device, the source access network device is the another network device.

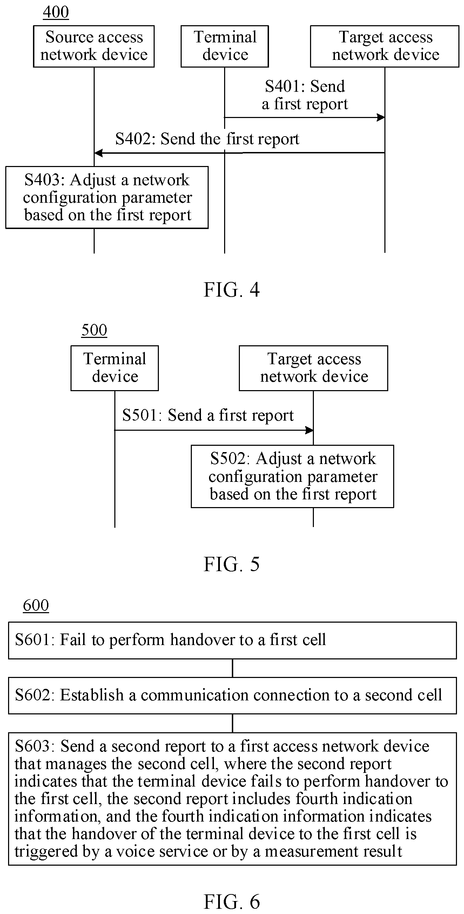

FIG. 4 is a schematic flowchart of a communication method 400 according to an embodiment of this application. As shown in FIG. 4, a terminal device sends a first report to a target access network device, the target access network device forwards the first report to a source access network device, and the source access network device adjusts a network configuration parameter based on the first report.

S401: The terminal device sends the first report to the target access network device.

Correspondingly, the target access network device receives the first report from the terminal device.

In the embodiment shown in FIG. 4, the first report is a report sent by the terminal device to the source access network device. Because an access network device currently connected to the terminal device is the target access network device, the terminal device may forward the first report to the source access network device via the target access network device. For example, the target access network device encapsulates the first report into a container (container) and sends the container to the source access network device. The first report includes identification information of a source cell, where the identification information of the source cell indicates that the first report is a report sent to an access network device of the source cell (namely, the source access network device). The target access network device may determine, based on the identification information of the source cell in the first report, that the first report is the report sent to the source access network device.

For example, when a reporting condition includes one or more of the foregoing condition 1, condition 2, or condition 4, and a process of performing cell redirection by the terminal device meets the reporting condition, a case of a potential failure in the cell redirection process may be caused by inappropriate configuration of a candidate frequency of the source cell. In this case, the terminal device records the first report, and sends the first report to the source access network device, so that the source access network device may determine, with reference to the first report, whether to optimize the candidate frequency, to reduce a probability of a cell redirection failure of the terminal device in a network. The first report includes the identification information of the source cell. The target access network device may determine, based on the identification information of the source cell in the first report, that the first report is the report sent to the source access network device. The target access network device transparently transmits the first report to the source access network device. In other words, after determining that a target device of the first report is the source access network device, the target access network device does not parse content of the first report, and forwards the first report to the source access network device.

In the example, the terminal device determines, based on the reporting condition for triggering the terminal device to record the first report, that the first report is the first report sent to the source access network device. However, this application is not limited thereto. The terminal device may not perform such determining. When the cell redirection process meets the reporting condition, the terminal device records the first report, and sends the first report to the source access network device. The source access network device analyzes a cause for a potential failure risk in the cell redirection process of the terminal device (refer to related descriptions in S403).

S402: The target access network device sends the first report to the source access network device.

Correspondingly, the source access network device receives the first report from the target access network device.

S403: The source access network device adjusts a network configuration parameter based on the first report.

The source access network device may determine, based on the first report, that the terminal device successfully performs cell redirection from the source cell, but the case of the potential failure exists. The source access network device may adjust the network parameter configuration based on the first report. Optionally, a plurality of terminal devices perform cell redirection from the source cell to another cell. When a process of performing cell redirection by the terminal device meets the reporting condition, the terminal device records a first report, and sends the first report to the source access network device. The source access network device collects the first report. If the source access network device receives first reports sent by a specific quantity (for example, a preset quantity) of terminal devices and indicating that the potential failure risk exists in a cell redirection process, the source access network device may perform network parameter optimization based on first reports of the plurality of terminal devices, to reduce a probability of a redirection failure. For example, the source access network device optimizes a candidate frequency configuration based on the first reports from the plurality of terminal devices. For example, the first reports sent by the plurality of terminal devices include frequency information of the cell that is successfully accessed by the corresponding terminal devices by performing cell redirection from the source cell. The source access network device may configure, with reference to a frequency that is indicated by the first reports from the plurality of terminal devices and on which the terminal devices successfully complete cell redirection, a candidate frequency on which the terminal device in the source cell performs cell redirection. However, this application is not limited thereto. The source access network device may further adjust another network parameter configuration based on other information in the first report.

As described above, in an implementation, the terminal device does not determine a cause for the potential failure in the cell redirection process. When the cell redirection process meets the reporting condition, the terminal device records the first report, and sends the first report to the source access network device, and the source access network device analyzes the cause for the potential failure in the cell redirection process of the terminal device. If the source access network device analyzes that the cause for the potential failure in the cell redirection process of the terminal device is inappropriate configuration of a parameter of the source access network device, the source access network device may perform network parameter optimization with reference to the first report. If the source access network device analyzes that the cause for the potential failure in the cell redirection process of the terminal device may be inappropriate configuration of a parameter of the target access network device, the source access network device may notify the target access network device. In the implementation, when the terminal device determines that the potential failure risk exists in the cell redirection process, the terminal device sends the first report to the source access network device that indicates the terminal device to perform cell redirection. The first report may not include cell redirection related information (such as candidate frequency information) configured by the source access network device for the terminal device. The source access network device analyzes, based on the first report with reference to the cell redirection related configuration information previously provided for the terminal device, the cause for the potential failure risk. This can improve accuracy of network optimization while reducing information overheads of the first report.

Optionally, the source access network device sends a first message to the target access network device, where the first message includes information related to the target access network device in the first report.

After receiving the first report, the source access network device analyzes information in the first report, and determines that a problem of the potential failure risk in the cell redirection process of the terminal device is related to the target access network device. In this case, the source access network device forwards the information related to the target access network device in the first report to the target access network device.

For example, the first report indicates that the cell redirection process of the terminal device meets the reporting condition 1 and the reporting condition 2. This indicates that although the terminal device successfully performs redirection to the target cell, time from time when the terminal device receives an RRC release message from the source access network device to time when the terminal device sends an random access preamble to the target access network device is long (in other words, running duration of a first timer is less than or equal to a first threshold and greater than or equal to a second threshold), time from time when the terminal device receives the RRC release message from the source access network device to time when the terminal device receives an RRC connection setup message from the target access network device is long (in other words, running duration of a second timer is less than or equal to a third threshold and greater than or equal to a fourth threshold), and the potential failure risk exists in the cell redirection process. The source access network device determines, based on the cell redirection process of the terminal device meeting both the reporting condition 1 and the reporting condition 2, that the cause for the potential failure risk in the cell redirection process may be related to both the configuration of the source access network device and the configuration of the target access network device. For example, the potential failure risk in the cell redirection process may be related to a resource configuration (such as a preamble and a time-frequency resource) of a random access procedure of the target cell. The source access network device sends the first message to the target access network device, where the first message may indicate that the cell redirection process of the terminal device meets the reporting condition 1 and the reporting condition 2. Optionally, the first message further includes other information in the first report, for example, the running duration of the first timer and/or the second timer, so that the target access network device performs network parameter optimization with reference to the first message. However, this application is not limited thereto. If the source access network device determines, after analyzing the first report, that the potential failure risk in the cell redirection process of the terminal device is not related to the target access network device, the source access network device may not send the first message to the target access network device.

FIG. 5 is a schematic flowchart of a communication method 500 according to an embodiment of this application.

S501: A terminal device sends a first report to a target access network device.

Correspondingly, the target access network device receives the first report from the terminal device.

In the embodiment shown in FIG. 5, the first report is a report sent by the terminal device to the target access network device, in other words, a target device of the first report is the target access network device. That the terminal device sends the first report to the target access network device may be that the terminal device sends the first report when the terminal device establishes a wireless communication connection to the target access network device, and the target access network device receives the first report on a radio channel. Alternatively, that the terminal device sends the first report to the target access network device may be that the terminal device moves from a target cell to another cell, the terminal device sends the first report to a third-party access network device to which a communication connection is established, and the third-party access network device forwards the first report to the target access network device. This is not limited in this application.

For example, when a reporting condition includes the foregoing condition 3, and a process of performing cell redirection by the terminal device meets the reporting condition 3, a potential failure risk in the cell redirection process in which the terminal device performs redirection to the target cell may be caused by inappropriate configuration of network access (for example, inappropriate configuration of a random access channel parameter) of the target cell. In this case, the terminal device records the first report, and may send the first report to the target access network device, so that the target access network device may determine, with reference to the first report, whether to optimize a network configuration parameter, to reduce a probability of a cell redirection failure of the terminal device in a network.

S502: The target access network device adjusts the network configuration parameter based on the first report.

The target access network device may determine, based on the first report, that the terminal device successfully performs cell redirection to the target cell, but a case of a potential failure exists. The target access network device may adjust the network configuration parameter based on the first report. When the cell redirection process of the terminal device that performs cell redirection to the target cell meets the reporting condition, the terminal device records the first report, and sends the first report to the target access network device. The target access network device collects the first report. If the target access network device receives first reports sent by a specific quantity (for example, a preset quantity) of terminal devices and indicating that the potential failure risk exists in the cell redirection process, the target access network device may adjust a network access parameter configuration, for example, configurations such as a random access channel (random access channel, RACH) configuration. However, this application is not limited thereto. Optionally, the potential failure risk in the cell redirection process of the terminal device may be caused by inappropriate configuration of a parameter of a target access network (namely, a network in which the target access network device is located), or may be caused by inappropriate configuration of a parameter of a source access network (namely, a network in which a source access network device is located). The first report may be sent to both the target access network device and the source access network device. After receiving the first report, the target access network device may perform network parameter optimization with reference to the first report, and forward the first report to the source access network device. The source access network device receives the first report, and may also perform network parameter optimization with reference to the first report. Alternatively, after receiving the first report, the target access network device may send, to the source access network device, information that is in the first report and that is used by the source access network device to optimize a network parameter.

In the example, the terminal device determines, based on the reporting condition for triggering the terminal device to record the first report, whether the first report is sent to the source access network device or to the target access network device, or whether both the source access network device and the target access network device need the first report. However, this application is not limited thereto. The terminal device may not perform such determining. When the reporting condition is met, the terminal device records the first report, and sends the first report to the target access network device. The first report includes identification information of the source cell. The target access network device determines, based on the first report, whether forwarding the first report or a part of information in the first report to the source access network device is needed, so that the source access network device performs network parameter optimization.

For example, the first report includes information indicating that the reporting condition includes the condition 1 and the condition 3, running duration of a first timer, running duration of a third timer, cell measurement information, and a frequency information of the target cell. After receiving the first report, the target access network device may determine, based on the reporting condition including the condition 3, that a case of the inappropriate configuration of the parameter of the target access network may exist, and may perform network parameter configuration with reference to the first report (for example, the running duration of the third timer and a measurement result of the target cell in the cell measurement information). The target access network device determines, based on the reporting condition, that a case of the inappropriate configuration of the parameter of the source access network may exist. The target access network device may send an interface message to the source access network device, to indicate that the potential failure risk exists in the cell redirection process of the terminal device. The interface message may include the running duration of the first timer, the cell measurement information, and frequency information of the target cell, so that the source access network device can determine, with reference to the interface message, whether to perform network parameter optimization.

Optionally, the first report further includes second indication information, and the second indication information indicates whether the cell redirection is triggered by a service or by a measurement result.

By way of example, and not limitation, the cell redirection may be triggered by a voice service. For example, the network in which the source access network device is located does not support a VoNR service or quality of a VoNR service deteriorates, and the source access network device may indicate the terminal device to perform cell redirection. If the terminal device records the first report because the reporting condition is met, and the first report includes the second indication information, the second indication information indicates that the cell redirection is triggered by the voice service. Alternatively, the source access network device indicates, based on a cell measurement result reported by the terminal device, the terminal device to perform cell redirection. If the terminal device sends the first report, the second indication information in the first report indicates that the cell redirection is triggered by the cell measurement result. The first report includes the second indication information, so that a network device (for example, the source access network device and/or the target access network device) that obtains the first report can determine a cause for triggering the terminal device to perform cell redirection. For example, when the cell redirection is triggered by the voice service, the network device may determine, based on the second indication information, that the cell redirection is not caused by deterioration of signal quality of a serving cell or signal quality of a neighboring cell being better than the signal quality of the serving cell, and may not adjust a network parameter related to measurement configuration with reference to the first report, but adjust only a parameter related to cell redirection configuration. This can improve accuracy of the network parameter optimization, and reduce unnecessary or incorrect network parameter optimization.

The foregoing describes, by using examples, the solution that is provided in this application and in which when a potential failure risk exists in a redirection process in which a terminal device performs redirection from a source cell to a target cell, the terminal device may send a first report to a network device, to notify the network device of the potential failure risk in the cell redirection process of the terminal device, so that the network device can perform network parameter optimization with reference to the first report, to improve performance of mobility management performed by the network device on the terminal device. Currently, a handover failure report of the terminal device may also be used as a reference for the network device to perform network parameter optimization. However, cell handover performed by the terminal device may be triggered by signal coverage quality or by service data, and cell handover failures of different triggering causes cause different directions of network optimization performed by the network device. Therefore, a problem that accuracy of network parameter optimization performed based on the handover failure report is not high exists. Embodiments of this application provide that when notifying the network device of a cell handover failure, the terminal device needs to notify the network device of a cause for triggering the terminal device to perform cell handover, so that the network device can perform network parameter optimization more accurately. The following provides descriptions with reference to FIG. 6.

FIG. 6 is another schematic flowchart of a communication method according to an embodiment of this application.

S601: A terminal device fails to perform handover to a first cell.

For example, the terminal device receives a handover command in a source cell, and the handover command indicates the terminal device to perform handover to the first cell. The terminal device performs cell handover, but the terminal device fails to perform handover to the first cell. The terminal device attempts to establish a communication connection to another cell.

S602: The terminal device establishes a communication connection to a second cell.

In an implementation, a RAT of the second cell is the same as that of the first cell.

For example, the terminal device performs inter-RAT network (or referred to as intersystem) cell handover from the source cell, and a source access network device indicates the terminal device to perform handover to the first cell whose RAT is different from that of the source cell. For example, the source cell is a cell in a 5G network and uses an NR access technology, the first cell is a cell in a 4G network and uses an E-UTRA technology, and vice versa. This is not limited in this application. If the terminal device fails to perform handover to the first cell, the terminal device continues to perform cell selection on a candidate frequency of a network in which the first cell is located, to access another cell whose RAT is the same as that of the first cell. A candidate frequency in each network may be predefined in a protocol. For example, both a candidate frequency of a cell in the 4G network and a candidate frequency of a cell in the 5G network are predefined in the protocol. If the terminal device successfully selects a suitable cell (for example, a cell that meets a signal quality requirement), in other words, the terminal device successfully selects the second cell whose RAT is the same as that of the first cell, the terminal device establishes, in the second cell, a communication connection to an access network device that manages the second cell. Therefore, the RAT of the second cell is the same as that of the first cell.

In another implementation, a RAT of the second cell is different from that of the first cell.

For another example, a source access network device indicates the terminal device to perform handover to the first cell whose RAT is different from that of the source cell. If the terminal device fails to perform handover to the first cell, the terminal device continues to perform cell selection on a frequency of a network in which the first cell is located, but the terminal device does not select a suitable cell whose RAT is the same as that of the first cell. The terminal device reestablishes a connection to the source cell. In the example, the second cell is the source cell of the terminal device, and the RAT of the second cell is different from that of the first cell. However, this application is not limited thereto. The second cell may alternatively be another cell whose RAT is different from that of the first cell.

S603: The terminal device sends a second report to the first access network device that manages the second cell, where the second report indicates that the terminal device fails to perform handover to the first cell, the second report includes fourth indication information, and the fourth indication information indicates that the handover of the terminal device to the first cell is triggered by a voice service or by a measurement result.

Correspondingly, the first access network device receives the second report from the terminal device, and determines, based on the fourth indication information in the second report, a trigger cause for triggering the terminal device to perform handover to the first cell.

By way of example, and not limitation, the second report is an RLF report or a connection setup failure report.

For example, if the fourth indication information indicates that the handover of the terminal device to the first cell is triggered by signal coverage quality, the first access network device may determine that the handover failure may be caused by inappropriate configuration of a measurement parameter and/or a measurement-based handover parameter of the source cell, for example, may be caused by inappropriate configuration of a parameter such as a threshold for measurement reporting of the source cell. However, this application is not limited thereto. The first access network device may send a second message to the source access network device, where the second message indicates the terminal device to perform handover from the source cell to the first cell, and the second message may include the second report or a part of information in the second report. The source access network device may perform network parameter optimization with reference to the second message. For example, the network parameter optimization includes but is not limited to adjusting the measurement configuration parameter and/or the measurement-based handover parameter. Optionally, that the terminal device fails to perform handover to the first cell may alternatively be caused by inappropriate configuration of a network parameter of the first cell, for example, a related parameter of a random access procedure. The first access network device may send the second report or a part of information in the second report to an access network device that manages the first cell, so that the access network device that manages the first cell uses the second report or the part of information in the second report as reference information for the network parameter optimization.

For another example, if the fourth indication information indicates that the handover of the terminal device to the first cell is triggered by the voice service, the first access network device may determine that the handover of the terminal device to the first cell is triggered by the voice service instead of signal coverage quality. Therefore, the first access network device may determine that, that the terminal device fails to perform handover to the first cell is not caused by inappropriate configuration of a measurement parameter and/or a measurement-based handover parameter of the source cell. The first access network device may not send the second report to the source access network device. Optionally, the first access network device sends the second report or a part of information in the second report to an access network device that manages the first cell.

Optionally, the second report further includes fifth indication information, and the fifth indication information indicates whether the terminal device selects a cell that meets a condition, or indicates whether the terminal device selects the suitable cell.

For example, the terminal device does not select a cell whose RAT is the same as that of the first cell, and the terminal device reestablishes a connection to the source cell, in other words, the second cell is the source cell before the terminal device performs cell handover. The second report includes the fifth indication information, and the fifth indication information indicates that no cell that meets the condition is selected, to notify a network that the terminal device does not select the cell whose RAT is the same as that of the first cell. This can provide detailed information related to a cell handover process for the network, provide a reference for the network device during network parameter optimization, and improve effect of mobility management performed by the network device on the terminal device. For example, the fifth indication information may be denoted as noSuitableCellFound. When noSuitableCellFound is "true (True)", it indicates that the terminal device does not select a cell that meets a condition of the suitable cell.

For another example, after failing to perform handover to the first cell, the terminal device selects a cell whose RAT is the same as that of the first cell, namely, the second cell. The second report includes the fifth indication information, and the fifth indication information indicates that the cell that meets the condition is selected, to notify a network that the terminal device selects the cell whose RAT is the same as that of the first cell after failing to perform handover to the first cell. This can provide detailed information related to a cell handover process for the network, provide a reference for a network device (for example, the source access network device and/or the access network device that manages the first cell) during network parameter optimization, and improve effect of mobility management performed by the network device on the terminal device.

The foregoing describes, with reference to FIG. 6, the solution in which after cell handover of a terminal device fails, when the terminal device reestablishes a communication connection to a network, the terminal device sends a second report to a connected access network device, where the second report includes indication information indicating a trigger cause for triggering the cell handover, so that the network can adjust an inappropriate parameter configuration more accurately based on the handover trigger cause, and reduce unnecessary or incorrect network parameter adjustment, to improve effect of mobility management performed by the network device on the terminal device.

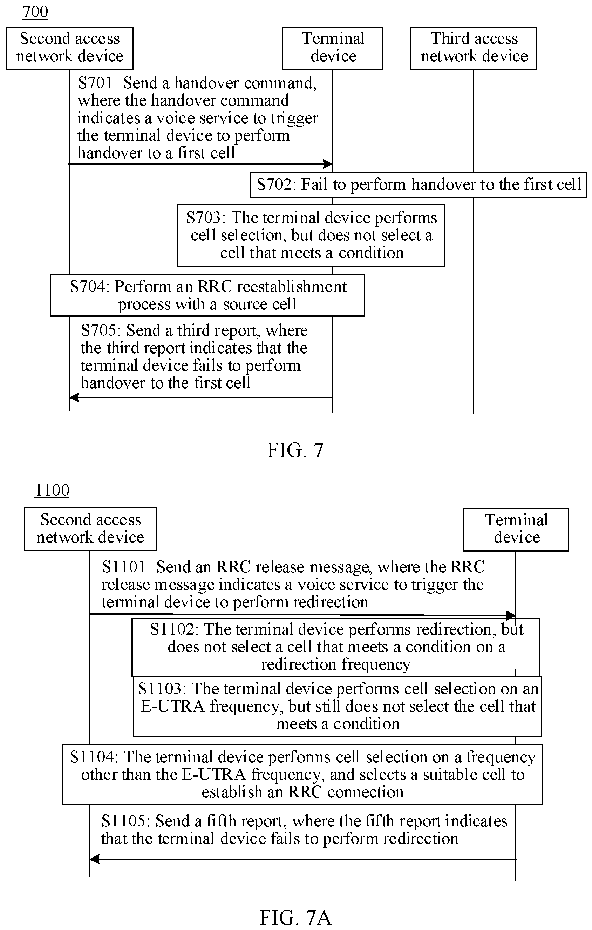

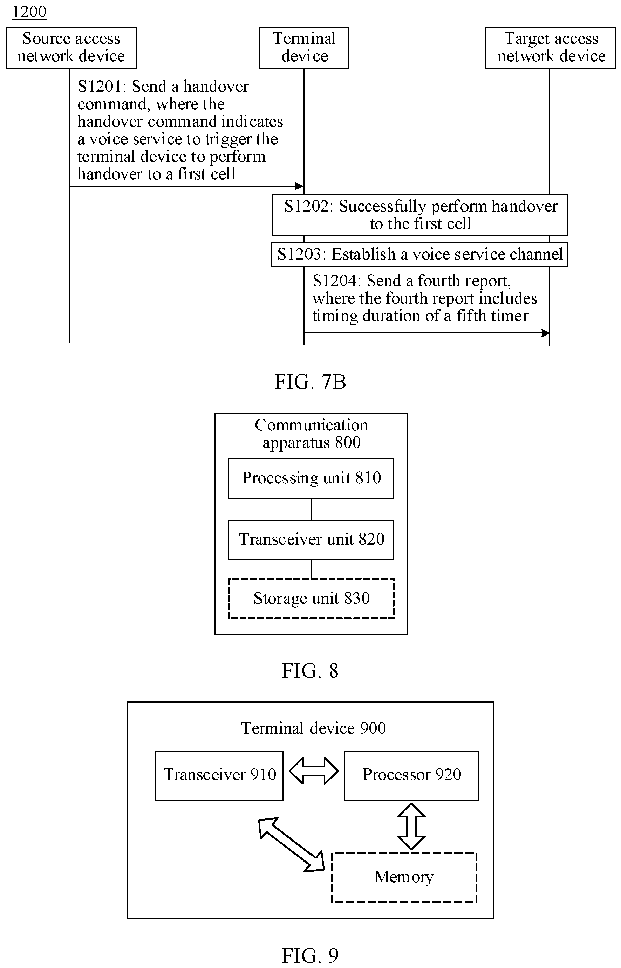

When the network device indicates, due to a voice service of the terminal device, the terminal device to perform handover to a cell (for example, a first cell) of an inter-RAT network, if the terminal device fails to perform cell handover, the terminal device performs, based on a current handover mechanism, cell selection on a candidate frequency of a network of a RAT to which the first cell belongs, and selects a cell that meets a condition for access. If the voice service is a normal voice service, the to-be-met condition is a condition of a suitable cell. If the voice service is an emergency voice service, the to-be-met condition is a condition of a suitable cell and an acceptable cell. In this case, the terminal device first selects the suitable cell, and if no suitable cell is selected, the terminal device selects the acceptable cell. In embodiments of this application, if cell handover of the terminal device is triggered by a voice service, but the handover fails, and a cell that meets a condition is not selected during cell selection, the terminal device may reestablish a connection to an access network device of a source cell. The following provides descriptions with reference to FIG. 7.

FIG. 7 is another schematic flowchart of a communication method according to an embodiment of this application.

S701: A second access network device sends a handover command to a terminal device, where the handover command indicates a voice service to trigger the terminal device to perform handover to a first cell.

For example, a serving cell (namely, a source cell) of the terminal device is an NR cell, and a 5G network in which the NR cell is located does not support a VoNR policy, and cannot provide a voice service for the terminal device. When the terminal device has to-be-sent voice service data or to-be-received voice service data, the second access network device that manages the source cell sends the handover command to the terminal device, where the handover command indicates the voice service to trigger the terminal device to perform handover to the first cell in a 4G network. In other words, the second access network device indicates, according to the handover command, the terminal device to fall back, by using a cell handover process, to the cell in the 4G network to perform voice service data transmission. After receiving the handover command, the terminal device performs the cell handover process of handover to the first cell.

Optionally, a RAT of the first cell is different from that of the source cell.

S702: The terminal device fails to perform handover to the first cell.

The first cell is a cell managed by a third access network device. The terminal device performs a random access procedure in the first cell, and attempts to perform handover to the first cell, but the terminal device fails to perform handover to the first cell.

S703: The terminal device performs cell selection, but does not select a cell that meets a condition.

After the terminal device fails to perform cell handover to the first cell, the terminal device performs cell selection, to access a cell whose RAT is the same as that of the first cell, but the terminal device does not select the cell that meets the condition.

If the voice service is a normal voice service, the to-be-met condition is a condition of a suitable cell (suitable cell). If the voice service is an emergency voice service, the to-be-met condition is a condition of a suitable cell and an acceptable cell (acceptable cell). For example, in an emergency voice service scenario, the terminal device first attempts to select a suitable cell. If no suitable cell is selected, the terminal device may select an acceptable cell.

For example, the terminal device selects, on an E-UTRA frequency on which the first cell is located or on another E-UTRA frequency, the cell that meets the condition, to access the cell whose RAT is the same as that of the first cell. For example, the terminal device detects a synchronization signal on one or more E-UTRA frequencies, and performs signal quality measurement when detecting a synchronization signal of a cell. If a measurement result of the cell meets an access condition, the terminal device performs a random access procedure in the cell.

If the terminal device does not select the cell that meets the condition on the one or more E-UTRA frequencies, the terminal device performs S704. For example, that after failing to perform handover to a target cell to which the terminal device performs handover, the terminal device performs cell selection on a candidate frequency of the cell whose RAT is the same as that of the target cell may be predefined in a protocol or preconfigured by the network. If the terminal device does not select the cell that meets the condition within preset duration after the terminal device fails to perform handover to the first cell, the terminal device determines that the cell that meets the condition is not selected, or if the terminal device does not select the cell that meets the condition on the candidate frequency of the cell whose RAT is the same as that of the target cell, the terminal device performs S704.

S704: The terminal device performs an RRC reestablishment process with the source cell.

The handover of the terminal device to the first cell is triggered by the voice service, instead of by coverage indicating that signal quality of the source cell deteriorates or signal quality of the first cell is better than the signal quality of the source cell, and the signal quality of the source cell still meets a communication requirement. Therefore, the terminal device may reestablish an RRC connection to the source cell to resume communication with the network.

S705: The terminal device sends a third report to the second access network device, where the third report indicates that the terminal device fails to perform handover to the first cell.

The second access network device is a source access network device that manages the source cell. Correspondingly, the second access network device receives the third report from the terminal device.

Optionally, the third report may include the fifth indication information in the embodiment shown in FIG. 6, and the fifth indication information indicates that the terminal device does not select the cell that meets the condition. In a normal (normal) voice service scenario, if the terminal device does not select a suitable cell, the fifth indication information may indicate that the terminal does not select the suitable cell in the normal voice service scenario. Alternatively, in the emergency voice service scenario, if the terminal device does not select the suitable cell, the terminal device selects the acceptable cell. The fifth indication information may also indicate that the terminal device does not select the suitable cell or does not select the acceptable cell in the emergency voice service fallback scenario.

For example, the fifth indication information may be denoted as noSuitableCellFound. When noSuitableCellFound is "true (True)", it indicates that the terminal device does not select the cell that meets the condition.

Optionally, the third report may further include the fourth indication information in the embodiment shown in FIG. 6, and the fourth indication information indicates that the cell handover is triggered by the voice service. After receiving the third report, the second access network device may determine, based on the fifth indication information and the fourth indication information, that the terminal device does not select the cell that meets the condition on the E-UTRA frequency (namely, an LTE frequency) for long time because the cell handover is triggered by the voice service, so that the second access network device can perform network parameter optimization with reference to the third report, and adjust a network configuration parameter.

For another example, the third report may not include the fourth indication information. Because the cell handover of the terminal device is indicated by the second access network device (namely, the source access network device), after the terminal device re-accesses the source cell, the second access network device may determine, based on identification information of the terminal device, that the cell handover of the terminal device is triggered by the voice service, and determine, based on the third report, that the terminal device fails to perform cell handover. The second access network device may perform network parameter optimization with reference to the third report, for example, adjust a parameter configuration of the handover triggered by the voice service. This is not limited in this application.

According to the solution provided in the embodiment shown in FIG. 7, if the terminal device fails to perform cell handover and does not select the cell that meets the condition during cell selection, the terminal device may reestablish the connection to the access network device of the source cell. Because the cell handover is not caused by deterioration of signal quality of the source access network device in the source cell, the signal quality of the source access network device in the source cell can meet the communication requirement of the terminal device. This can reduce a case in which the terminal device performs cell selection on the E-UTRA frequency for long time or a communication connection to the network is disconnected due to the voice service fallback.

In a possible implementation, if the terminal device performs cell selection and selects the E-UTRA cell that meets the condition, the terminal device initiates a connection setup procedure in the cell. Optionally, the terminal device records a piece of indication information in the third report, where the indication information indicates whether the E-UTRA cell accessed by the terminal device is the acceptable cell, or the indication information indicates that a voice service type of the fallback is the normal (normal) voice service or the emergency voice service. In the emergency voice service fallback scenario, if the terminal device does not select the acceptable cell, but selects the suitable cell, the terminal device further records a piece of indication information in the third report. The indication information may indicate that the terminal device does not select the suitable cell or does not select a suitable E-UTRA cell (the E-UTRA cell may also be referred to as a 4G cell) in the emergency voice service fallback scenario.

When a network device indicates, due to a voice service of a terminal device, the terminal device to perform cell redirection, if the terminal device fails to perform cell redirection, the terminal device performs cell selection, and selects a cell that meets a condition for access, or if the terminal device does not select a cell that meets a condition, the terminal device may reestablish a connection to the access network device of the source cell. The following describes a method 1100 provided in an embodiment of this application with reference to FIG. 7A.

S1101: A second access network device sends an RRC release message to a terminal device, where the RRC release message indicates a voice service to trigger the terminal device to perform redirection.

Correspondingly, the terminal device receives the RRC release message from the second access network device, and determines that redirection is triggered by the voice service. The RRC release message may include a redirection frequency for performing redirection.

S1102: The terminal device performs redirection, but does not select a cell that meets a condition on the redirection frequency.

The terminal device records a fifth report, where the fifth report indicates that the terminal device fails to perform redirection.

In an implementation, the fifth report further includes the redirection frequency indicating a redirection process.

S1103: The terminal device performs cell selection on an E-UTRA frequency, and still does not select the cell that meets the condition.

When the terminal device performs redirection but does not select the cell that meets the condition on the redirection frequency, the terminal device performs cell selection on an E-UTRA frequency other than the redirection frequency, but does not select the cell that meets the condition.

For S1103 in the embodiment shown in FIG. 7A, refer to the foregoing descriptions in S703 in the embodiment shown in FIG. 7. For brevity, details are not described herein again.

S1104: The terminal device performs cell selection on a frequency other than the E-UTRA frequency, and selects a suitable cell to establish an RRC connection.

In S1103, the terminal device performs cell selection on the E-UTRA frequency other than the redirection frequency, and still does not select the cell that meets the condition. In this case, the terminal device performs cell selection again in S1104. This time of cell selection may be performed on the frequency other than the E-UTRA frequency, and the terminal device performs cell selection on a frequency on which the suitable cell may be selected. For example, the terminal device may perform cell selection on an NR frequency, select an NR cell that can be used as the suitable cell, and establish an RRC connection to the NR cell.

S1105: The terminal device sends a fifth report to the second access network device, where the fifth report indicates that the terminal device fails to perform redirection.

In an optional implementation, the fifth report may include the fifth indication information in the embodiment shown in FIG. 7, and the fifth indication information indicates that the terminal device does not select the cell that meets the condition.

In an optional implementation, the fifth report may include indication information indicating that the redirection is triggered by the voice service. After receiving the fifth report, the second access network device may determine that the terminal device does not select the cell that meets the condition on the redirection frequency and the E-UTRA frequency other than the redirection frequency for long time because the redirection is triggered by the voice service, so that the second access network device can perform network parameter optimization with reference to the fifth report, and adjust a network configuration parameter.

When a network device indicates, due to a voice service of a terminal device, the terminal device to perform handover to a first cell of an inter-RAT network, if the terminal device successfully performs handover to the first cell but a potential failure risk exists, the terminal device may record a fourth report, where the fourth report may be a successful handover report (successful handover report, SHR) or a random access report. The terminal device records related information of a potential failure problem in a successful handover process. Embodiments of this application provide that the fourth report may include service interruption duration, so that an access network device (for example, a source access network device and/or a target access network device) related to the handover process can perform network configuration parameter optimization with reference to the service interruption duration and context of the terminal device in the fourth report, to reduce a probability of a handover failure of the terminal device. The following describes a communication method 1200 provided in an embodiment of this application with reference to FIG. 7B.

S1201: A source access network device sends a handover command to a terminal device, where the handover command indicates a voice service to trigger the terminal device to perform handover to a first cell.

For details, refer to the foregoing descriptions in S701. Details are not described again. Optionally, a RAT of the first cell is different from that of a source cell. After receiving the handover command, the terminal device starts a fifth timer, and performs cell handover.

Optionally, the source access network device sends first configuration information to the terminal device, where the first configuration information is used to configure a trigger condition for triggering recording of a fourth report. The trigger condition may include one or more of the following conditions:
that running duration of the timer is greater than or equal to a seventh threshold;
that a ratio of the running duration of the timer to maximum running duration of the timer is greater than or equal to an eighth threshold;
that a quantity of random access times that the terminal device attempts to access a target access network device is greater than or equal to a ninth threshold; and
that interruption time of data transmission between the terminal device and an access network device (including the source access network device and/or the target access network device) is greater than or equal to a tenth threshold.

The first configuration information may include one or more of the seventh threshold, the eighth threshold, the ninth threshold, or the tenth threshold.

In an implementation, the trigger condition is determined by the source access network device. The source access network device sends the first configuration information to the terminal device, and notifies the terminal device of the trigger condition.

In another implementation, the trigger condition is determined by the target access network device. The target access network device sends the first configuration information to the source access network device, and the source access network device forwards the first configuration information to the terminal device, to notify the terminal device of the trigger condition by using the first configuration information.

S1202: The terminal device successfully performs handover to the first cell managed by the target access network device.

The terminal device performs cell handover according to the handover command, and successfully performs handover to the first cell managed by the target access network device. After successfully performing handover to the target access network device, the terminal device may initiate a TAU update process, and complete TAU update with the target access network device.

For example, the target access network device may be an eNodeB in an LTE network.

S 1203 : The terminal device establishes a voice service channel with the target access network device.

The terminal device stops the fifth timer. In this case, the running duration of the fifth timer is duration from time when the terminal device receives the handover command to time when the voice service channel is successfully established, namely, voice service interruption duration. Alternatively, the running duration of the fifth timer is duration from time when the terminal device receives the handover command to time when the terminal device successfully communicates a service data packet with the target access network device.

S 1204: The terminal device sends the fourth report to the source access network device, where the fourth report includes the running duration of the fifth timer.

The trigger condition for recording the fourth report by the terminal device is met, and the terminal device records the fourth report. For example, the terminal device successfully completes a random access procedure between the terminal device and the first cell, the trigger condition for recording the fourth report is met, and the terminal device records the fourth report.

Optionally, the fourth report includes third indication information, where the third indication information indicates that a trigger cause for performing cell handover by the terminal device is a voice service fallback. Alternatively, the third indication information indicates that a handover trigger cause for performing cell handover by the terminal device is a normal (normal) voice service fallback or an emergency voice service fallback.

In this embodiment, if the terminal device determines that a potential handover failure risk exists in a process of performing handover from the source cell to the first cell, the terminal device records the fourth report. The fourth report includes the running duration of the fifth timer, so that an access network device (for example, the source access network device and/or the target access network device) related to the handover process can perform network configuration parameter optimization with reference to the service interruption duration and context of the terminal device in the fourth report, for example, reduce a handover threshold, to reduce a probability of a handover failure and/or excessively long service interruption time of the terminal device. In this embodiment of this application, the terminal device sends a report (for example, one or more of the first report to the fifth report) to an access network device. For example, the terminal device sends the report to an access network device A.

If a target device of the report is the source access network device, in other words, the report needs to be sent to the source access network device, and the access network device A and the source access network device are different network devices, the access network device A sends a part or all of information about the report to the source access network device. Optionally, the access network device A may further send type information of the report to the source access network device. A report type may be a report type of a 5G (for example, NR or gNB) RAT, a report type of a 4G (for example, eLTE or ng-eNB) RAT connected to a 5G core network, a report type of a 4G (for example, LTE or eNB) RAT connected to a 4G core network, or a report type of another RAT. In an implementation, if an interface that may be directly used for communication exists between the access network device A and the source access network device, the access network device A sends the part or all of the information about the report to the source access network device through the interface between the access network devices (for example, an interface between base stations). For example, the interface between the access network device A and the source access network device may be an X2 interface or an Xn interface. The access network device A may send the part or all of the information about the report to the source access network device by using a failure indication (FAILURE INDICATION), a radio link failure indication (RLF INDICATION) message, a handover report (HANDOVER REPORT) message, an access and mobility indication (ACCESS AND MOBILITY INDICATION) message, or another message.

In another implementation, if the access network device A cannot directly communicate with the source access network device, the access network device A may send the part or all of the information about the report to the source access network device via a core network device. Optionally, the access network device A may further send the type information of the report to the source access network device. The access network device A may send the part or all of the information about the report to the core network device through an interface between the access network device and the core network device. For example, the access network device A sends the part or all of the information about the report to the core network device through an S 1 interface or an NG interface, and the core network device forwards, to the source access network device, the information received from the access network device A. The access network device A may send the part or all of the information about the report to the source access network device by using at least one of the following messages on the S 1 interface/NG interface:
an uplink RAN configuration transfer (UPLINK RAN CONFIGURATION TRANSFER) message, a downlink RAN configuration transfer (DOWNLINK RAN CONFIGURATION TRANSFER) message, a base station configuration transfer (eNB CONFIGURATION TRANSFER) message, a core network device configuration transfer (MME CONFIGURATION TRANSFER) message, or another message.

If a target device of the report is the target access network device, in other words, the report needs to be sent to the target access network device, and the access network device A and the target access network device are different network devices, the access network device A sends a part or all of information about the report to the target access network device. For a specific sending manner, refer to the manner in which the access network device A sends the report to the source access network device. For brevity, details are not described herein again.

The foregoing describes in detail the methods provided in this disclosure with reference to FIG. 2 to FIG. 7, FIG. 7A, and FIG. 7B. The following describes a communication apparatus and a communication device provided in this disclosure with reference to the accompanying drawings. To implement the foregoing functions in the methods provided in this disclosure, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 8 is a block diagram of a communication apparatus according to this disclosure. As shown in FIG. 8, the communication apparatus 800 may include a transceiver unit 820.

In a possible design, the communication apparatus 800 may correspond to the terminal device in the foregoing method, a chip disposed in (or used in) the terminal device, or another apparatus, module, circuit, unit, or the like that can implement the method performed by the terminal device.

It should be understood that the communication apparatus 800 may include units configured to perform the methods performed by the terminal device in the methods shown in FIG. 2 to FIG. 7, FIG. 7A, and FIG. 7B. In addition, the units in the communication apparatus 800 and the foregoing other operations and/or functions are respectively intended to implement corresponding procedures of the methods shown in FIG. 2 to FIG. 7, FIG. 7A, and FIG. 7B.

Optionally, the communication apparatus 800 may further include a processing unit 810. The processing unit 810 may be configured to process instructions or data, to implement a corresponding operation.

It should be further understood that when the communication apparatus 800 is the chip disposed in (or used in) the terminal device, the transceiver unit 820 in the communication apparatus 800 may be an input/output interface or a circuit in the chip, and the processing unit 810 in the communication apparatus 800 may be a processor in the chip.

Optionally, the communication apparatus 800 may further include a storage unit 830. The storage unit 830 may be configured to store instructions or data. The processing unit 810 may execute the instructions or the data stored in the storage unit, to enable the communication apparatus to implement a corresponding operation.

It should be understood that the transceiver unit 820 in the communication apparatus 800 may be implemented through a communication interface (for example, a transceiver or an input/output interface), for example, may correspond to a transceiver 910 in a terminal device 900 shown in FIG. 9. The processing unit 810 in the communication apparatus 800 may be implemented by using at least one processor, for example, may correspond to a processor 920 in the terminal device 900 shown in FIG. 9. Alternatively, the processing unit 810 in the communication apparatus 800 may be implemented by using at least one logic circuit. The storage unit 830 in the communication apparatus 800 may correspond to a memory in the terminal device 900 shown in FIG. 9.

It should be further understood that a specific process in which each unit performs the foregoing corresponding step has been described in detail in the foregoing method. For brevity, details are not described herein again.

In another possible design, the communication apparatus 800 may correspond to the access network device in the foregoing method, a chip disposed in (or used in) the access network device, or another apparatus, module, circuit, unit, or the like that can implement the method performed by the access network device.

It should be understood that the communication apparatus 800 may include units configured to perform the methods performed by the access network device in the methods shown in FIG. 2 to FIG. 7, FIG. 7A, and FIG. 7B. In addition, the units in the communication apparatus 800 and the foregoing other operations and/or functions are respectively intended to implement corresponding procedures of the methods shown in FIG. 2 to FIG. 7, FIG. 7A, and FIG. 7B.

Optionally, the communication apparatus 800 may further include a processing unit 810. The processing unit 810 may be configured to process instructions or data, to implement a corresponding operation.

It should be further understood that when the communication apparatus 800 is the chip disposed in (or used in) the access network device, the transceiver unit 820 in the communication apparatus 800 may be an input/output interface or a circuit in the chip, and the processing unit 810 in the communication apparatus 800 may be a processor in the chip.

Optionally, the communication apparatus 800 may further include a storage unit 830. The storage unit 830 may be configured to store instructions or data. The processing unit 810 may execute the instructions or the data stored in the storage unit, to enable the communication apparatus to implement a corresponding operation.

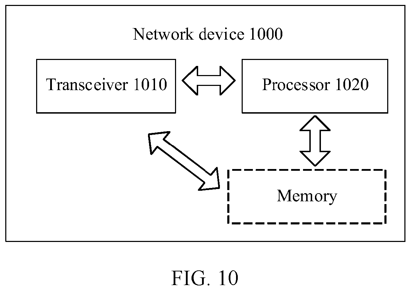

It should be understood that when the communication apparatus 800 is the access network device, the transceiver unit 820 in the communication apparatus 800 may be implemented through a communication interface (for example, a transceiver or an input/output interface), for example, may correspond to a transceiver 1010 in a network device 1000 shown in FIG. 10. The processing unit 810 in the communication apparatus 800 may be implemented by using at least one processor, for example, may correspond to a processor 1020 in the network device 1000 shown in FIG. 10. The processing unit 810 in the communication apparatus 800 may be implemented by using at least one logic circuit. The storage unit 830 in the communication apparatus 800 may correspond to a memory in the network device 1000 shown in FIG. 10.

It should be further understood that a specific process in which each unit performs the foregoing corresponding step has been described in detail in the foregoing method. For brevity, details are not described herein again.

FIG. 9 is a diagram of a structure of a terminal device 900 according to this disclosure. The terminal device 900 may be used in the system shown in FIG. 1, to perform functions of the terminal device in the foregoing methods. As shown in the figure, the terminal device 900 includes a processor 920 and a transceiver 910. Optionally, the terminal device 900 further includes a memory. The processor 920, the transceiver 910, and the memory may communicate with each other through an internal connection path, to transfer a control signal and/or a data signal. The memory is configured to store a computer program, and the processor 920 is configured to execute the computer program in the memory, to control the transceiver 910 to receive and send a signal.

The processor 920 may be configured to perform an action that is implemented inside the terminal device and that is described in the foregoing methods. The transceiver 910 may be configured to perform an action of sending to a network device or receiving from the network device by the terminal device in the foregoing methods. For details, refer to the descriptions in the foregoing methods. Details are not described herein again.

Optionally, the terminal device 900 may further include a power supply, configured to supply power to various devices or circuits in the terminal device.

FIG. 10 is a diagram of a structure of a network device 1000 according to this disclosure. The network device 1000 may be used in the system shown in FIG. 1, to perform functions of the access network device in the foregoing methods. As shown in the figure, the network device 1000 includes a processor 1020 and a transceiver 1010. Optionally, the network device 1000 further includes a memory. The processor 1020, the transceiver 1010, and the memory may communicate with each other through an internal connection path, to transfer a control signal and/or a data signal. The memory is configured to store a computer program, and the processor 1020 is configured to execute the computer program in the memory, to control the transceiver 1010 to receive and send a signal.

The processor 1020 may be configured to perform an action that is implemented inside the network device and that is described in the foregoing methods. The transceiver 1010 may be configured to perform an action of sending to a network device or receiving from the network device by the network device in the foregoing methods. For details, refer to the descriptions in the foregoing methods. Details are not described herein again.

Optionally, the network device 1000 may further include a power supply, configured to supply power to various devices or circuits in the network device.

In the terminal device shown in FIG. 9 and the network device shown in FIG. 10, the processor and the memory may be combined into one processing apparatus, and the processor is configured to execute program code stored in the memory to implement the foregoing functions. During specific implementation, the memory may alternatively be integrated into the processor, or independent of the processor. The processor may correspond to the processing unit in FIG. 8. The transceiver may correspond to the transceiver unit in FIG. 8. The transceiver 910 may include a receiver (or referred to as a receiver machine or a receiver circuit) and a transmitter (or referred to as a transmitter machine or a transmitter circuit). The receiver is configured to receive a signal, and the transmitter is configured to transmit a signal.

In this disclosure, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams in this disclosure. The general-purpose processor may be a microprocessor or any conventional processor or the like. The steps of the methods disclosed with reference to this disclosure may be directly performed and completed by a hardware processor, or may be performed and completed by using a combination of hardware in the processor and a software module.

In this disclosure, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction structure or a data structure and that can be accessed by a computer, but is not limited herein. The memory in this application may alternatively be a circuit or any other apparatus that can implement a storage function, and is configured to store program instructions and/or data.

This disclosure further provides a processing apparatus, and the processing apparatus includes a processor and a (communication) interface. The processor is configured to perform any one of the foregoing methods.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip.

According to the methods provided in this disclosure, this disclosure further provides a computer program product. The computer program product includes computer program code. When the computer program code is executed by one or more processors, an apparatus including the processor is enabled to perform the methods shown in FIG. 2 to FIG. 7, FIG. 7A, and FIG. 7B.

All or a part of the technical solutions provided in this disclosure may be implemented by using software, hardware, firmware, or any combination thereof. When software is used to implement the technical solutions, all or a part of the technical solutions may be implemented in a form of a computer program product. The computer program product includes one or more computer instructions. When the computer program instruction is loaded and executed on a computer, all or a part of procedures or functions according to the present invention are generated. The computer instruction may be stored in a computer-readable storage medium, or may be transmitted from one computer-readable storage medium to another computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the methods provided in this disclosure, this disclosure further provides a computer-readable storage medium. The computer-readable storage medium stores program code. When the program code is run by one or more processors, an apparatus including the processor is enabled to perform the methods shown in FIG. 2 to FIG. 7, FIG. 7A, and FIG. 7B.

According to the method provided in this disclosure, this disclosure further provides a system. The system includes the foregoing one or more terminal devices. The system may further include the foregoing one or more access network devices.

In several embodiments provided in this disclosure, it should be understood that the disclosed systems, apparatuses and methods may be implemented in other manners. For example, the described apparatuses are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. A part or all of the units may be selected based on an actual requirement to achieve the objectives of the solutions.

The foregoing descriptions are merely specific implementations of this disclosure, but are not intended to limit the protection scope of this disclosure. Any variation or replacement readily figured out by a person skilled in the art within the technical scope disclosed in this disclosure shall fall within the protection scope of this disclosure. Therefore, the protection scope of this disclosure shall be subject to the protection scope of the claims.

## Claims

1. A communication method, wherein the method is applied to a terminal device, and the method comprises:
performing redirection from a source cell to a target cell, wherein the source cell is managed by a source access network device, and the target cell is managed by a target access network device; and
sending a first report, wherein the first report comprises information indicating that a potential failure exists in a process of performing cell redirection by the terminal device, and comprises identification information of the target cell.

2. The method according to claim 1, wherein the method further comprises:
when the cell redirection process meets a reporting condition, recording the first report, wherein the reporting condition comprises one or more of the following conditions:
running duration of a first timer is less than or equal to a first threshold and greater than or equal to a second threshold, wherein the running duration of the first timer is duration from time when the terminal device receives a radio resource control RRC release message from the source access network device to time when the terminal device sends a random access preamble to the target access network device;
running duration of a second timer is less than or equal to a third threshold and greater than or equal to a fourth threshold, wherein the running duration of the second timer is duration from the time when the terminal device receives the RRC release message from the source access network device to time when the terminal device receives an RRC connection setup message from the target access network device;
running duration of a third timer is less than or equal to a fifth threshold and greater than or equal to a sixth threshold, wherein the running duration of the third timer is duration from time when the terminal device sends an RRC connection request message to the target access network device to the time when the terminal device receives the RRC connection setup message from the target access network device; or
the terminal device fails to perform cell redirection on a first frequency, and successfully performs cell redirection on a frequency other than the first frequency, wherein the first frequency is a candidate frequency that is configured by the source access network device for the terminal device and that is used for the cell redirection, and a frequency of the target cell is the frequency other than the first frequency.

3. The method according to claim 2, wherein
the second threshold is a product of the first threshold and a first coefficient; and/or
the fourth threshold is a product of the third threshold and a second coefficient; and/or
the sixth threshold is a product of the fifth threshold and a third coefficient, wherein
the first coefficient, the second coefficient, and the third coefficient are less than 1.

4. The method according to claim 2 or 3, wherein the method further comprises:
receiving first indication information, wherein the first indication information indicates the reporting condition.

5. The method according to claim 4, wherein the receiving, by the terminal device, first indication information comprises:
receiving an RRC message, wherein the RRC message comprises the first indication information.

6. The method according to any one of claims 2 to 5, wherein the first report indicates one or more of the following:
the reporting condition, identification information of the source cell, cell measurement information, redirection frequency information, the identification information of the target cell, frequency information of the target cell, the running duration of the first timer, the running duration of the second timer, the running duration of the third timer, or running duration of a fourth timer, wherein
the cell measurement information comprises one or more of measurement information of the source cell, measurement information of the target cell, measurement information of a neighboring cell of the source cell, or measurement information of a neighboring cell of the target cell, and the running duration of the fourth timer is duration from the time when the terminal device receives the RRC release message from the source access network device to time when the terminal device successfully establishes a service channel with the target access network device, or the running duration of the fourth timer is duration from the time when the terminal device receives the RRC release message from the source access network device to time when the terminal device successfully communicates a service data packet with the target access network device.

7. The method according to any one of claims 1 to 6, wherein the sending, by the terminal device, a first report comprises:
sending the first report to the target access network device, wherein the first report comprises the identification information of the source cell.

8. The method according to any one of claims 1 to 7, wherein the first report further comprises second indication information, and the second indication information indicates whether the cell redirection is triggered by a service or by signal coverage quality.

9. The method according to any one of claims 1 to 8, wherein the cell redirection is triggered by the service, and the target access network device and the source access network device use different radio access technologies RATs.

10. A communication method, comprising:
receiving a first report from a terminal device, wherein the first report comprises information indicating that a potential failure exists in a process of performing cell redirection by the terminal device, and comprises identification information of a target cell for the redirection, and the target cell is managed by a target access network device.

11. The method according to claim 10, wherein the method further comprises:
sending the first report to a source access network device, wherein the first report comprises identification information of a source cell for the redirection, and the source cell is managed by the source access network device; and/or
adjusting a network configuration parameter based on the first report.

12. The method according to claim 10 or 11, wherein the first report indicates a reporting condition for triggering the terminal device to send the first report, and the reporting condition comprises one or more of the following conditions:
running duration of a first timer is less than or equal to a first threshold and greater than or equal to a second threshold, wherein the running duration of the first timer is duration from time when the terminal device receives a radio resource control RRC release message from the source access network device to time when the terminal device sends a random access preamble to the target access network device;
running duration of a second timer is less than or equal to a third threshold and greater than or equal to a fourth threshold, wherein the running duration of the second timer is duration from the time when the terminal device receives the RRC release message from the source access network device to time when the terminal device receives an RRC connection setup message from the target access network device;
running duration of a third timer is less than or equal to a fifth threshold and greater than or equal to a sixth threshold, wherein the running duration of the third timer is duration from time when the terminal device sends an RRC connection request message to the target access network device to the time when the terminal device receives the RRC connection setup message from the target access network device; or
the terminal device fails to perform cell redirection on a first frequency, and successfully performs cell redirection on a frequency other than the first frequency, wherein the first frequency is a candidate frequency that is configured by the source access network device for the terminal device and that is used for the cell redirection, and a frequency of the target cell is the frequency other than the first frequency, wherein
the source access network device manages the source cell for the cell redirection.

13. The method according to claim 12, wherein
the second threshold is a product of the first threshold and a first coefficient; and/or
the fourth threshold is a product of the third threshold and a second coefficient; and/or
the sixth threshold is a product of the fifth threshold and a third coefficient, wherein
the first coefficient, the second coefficient, and the third coefficient are less than 1.

14. The method according to claim 12 or 13, wherein the first report indicates one or more of the following:
the identification information of the source cell, cell measurement information, redirection frequency information, the identification information of the target cell, frequency information of the target cell, the running duration of the first timer, the running duration of the second timer, the running duration of the third timer, or running duration of a fourth timer, wherein
the cell measurement information comprises one or more of measurement information of the source cell, measurement information of the target cell, measurement information of a neighboring cell of the source cell, or measurement information of a neighboring cell of the target cell, and the running duration of the fourth timer is duration from the time when the terminal device receives the RRC release message from the source access network device to time when the terminal device successfully establishes a service channel with the target access network device, or the running duration of the fourth timer is duration from the time when the terminal device receives the RRC release message from the source access network device to time when the terminal device successfully communicates a service data packet with the target access network device.

15. The method according to any one of claims 12 to 14, wherein the method further comprises:
sending first indication information to the terminal device, wherein the first indication information indicates the reporting condition.

16. The method according to claim 15, wherein the sending first indication information to the terminal device comprises:
sending an RRC message to the terminal device, wherein the RRC message comprises the first indication information.

17. The method according to any one of claims 10 to 16, wherein the first report further comprises second indication information, and the second indication information indicates whether the cell redirection is triggered by a service or by signal coverage quality.

18. The method according to any one of claims 10 to 17, wherein the cell redirection is triggered by a voice service, the target access network device and the source access network device use different radio access technologies RATs, and the source access network device manages the source cell for the cell redirection.

19. A communication method, wherein the method is applied to a terminal device, and the method comprises:
failing to perform handover to a first cell;
establishing a communication connection to a second cell managed by an access network device; and
sending a second report to the access network device, wherein the second report indicates that the terminal device fails to perform handover to the first cell, the second report comprises fourth indication information, and the fourth indication information indicates that the handover of the terminal device to the first cell is triggered by a service or by signal coverage quality.

20. The method according to claim 19, wherein the second report further comprises fifth indication information, and the fifth indication information indicates whether the terminal device selects a cell that meets a condition, or indicates whether the terminal device selects a suitable cell.

21. A communication method, comprising:
receiving a second report from a terminal device, wherein the second report indicates that the terminal device fails to perform handover to a first cell, the second report comprises fourth indication information, and the fourth indication information indicates that the handover of the terminal device to the first cell is triggered by a service or by signal coverage quality.

22. The method according to claim 21, wherein the second report further comprises fifth indication information, and the fifth indication information indicates whether the terminal device selects a cell that meets a condition, or indicates whether the terminal device selects a suitable cell.

23. A communication method, wherein the method is applied to a terminal device, the terminal device fails to perform handover from a source cell to a first cell, the handover is triggered by a voice service, and the method comprises:
performing cell selection, but failing to select a cell that meets a condition;
sending a third report to a second access network device, wherein the third report indicates that the terminal device fails to perform handover to the first cell, and the second access network device manages the source cell.

24. The method according to claim 23, wherein the third report comprises fourth indication information and/or fifth indication information, the fourth indication information indicates that the handover is triggered by the voice service, and the fifth indication information indicates that the terminal device does not select the cell that meets the condition.

25. The method according to claim 23 or 24, wherein the sending a third report to a second access network device comprises:
performing connection reestablishment with the second access network device; and
sending the third report to the second access network device.

26. A communication method, wherein the method is applied to a second access network device, and the method comprises:
receiving a third report from a terminal device, wherein the third report indicates that the terminal device fails to perform handover to a first cell, and the second access network device manages a source cell.

27. The method according to claim 26, wherein the third report comprises fourth indication information and/or fifth indication information, the fourth indication information indicates that the handover is triggered by a voice service, and the fifth indication information indicates that the terminal device does not select a cell that meets a condition.

28. The method according to claim 26 or 27, wherein the receiving a third report from a terminal device comprises:
performing connection reestablishment with the terminal device; and
receiving the third report from the terminal device.

29. A communication apparatus, comprising:
a unit or module configured to perform the method according to any one of claims 1 to 9, 19 and 20, or 23 to 25.

30. A communication apparatus, comprising:
a unit or module configured to perform the method according to any one of claims 10 to 18, 21 and 22, or 26 to 28.

31. A communication apparatus, comprising a processor and a communication interface, wherein the processor performs the method according to any one of claims 1 to 9, 19 and 20, or 23 to 25, or the method according to any one of claims 10 to 18, 21 and 22, or 26 to 28 through the communication interface.

32. A computer-readable storage medium, storing instructions, wherein when the instructions are run on a computer, the computer is enabled to perform the method according to any one of claims 1 to 9, 19 and 20, or 23 to 25, or the method according to any one of claims 10 to 18, 21 and 22, or 26 to 28.

33. A computer program product, comprising instructions, wherein when the instructions are run, the method according to any one of claims 1 to 9, 19 and 20, or 23 to 25, or the method according to any one of claims 10 to 18, 21 and 22, or 26 to 28 is performed.

34. A communication system, comprising an access network device, wherein the access network device is configured to perform the method according to any one of claims 10 to 18, 19 and 20, or 23 to 25.

35. The communication system according to claim 34, comprising a terminal device, wherein the terminal device is configured to perform the method according to any one of claims 1 to 9, 21 and 22, or 26 to 28.
